# EUROPEAN PATENT APPLICATION

(11) **EP 4 711 070 A1**
(43) Date of publication of application: **18.03.2026**
(21) Application number: 23963039.5
(22) Date of filing: 26.12.2023
(51) Int. Cl.: B23K 26/16, B23K 26/70

(54) **DROSS TRANSPORT CONVEYOR, LASER PROCESSING DEVICE, AND WORKPIECE PROCESSING METHOD**

(71) Applicant: Yamazaki Mazak Corporation, Niwa-gun, Aichi 480-0197 (JP)
(72) Inventor: MICHINAKA, Kengo, Niwa-gun, Aichi 480-0197 (JP); KOBAYASHI, Yoji, Niwa-gun, Aichi 480-0197 (JP); SASAKI, Satoshi, Niwa-gun, Aichi 480-0197 (JP); TAHARA, Makoto, Niwa-gun, Aichi 480-0197 (JP)
(74) Representative: TBK
(86) International application number: PCT/JP2023/046603
(87) International publication number: WO 2025/141683

(57) **Abstract**

A dross transportation conveyor includes: a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of a laser beam on a workpiece; a first temperature rise prevention surface that covers at least a part of the first transportation plate and that either prevents a temperature rise of the first transportation plate due to energy of the laser beam; and a second temperature rise prevention surface that covers at least a part of the second transportation plate and that either prevents the temperature rise of the second transportation plate due to the energy of the laser beam.

## Description

### Technical Field

The present invention relates to a dross transportation conveyor, a laser beam machine apparatus, and a workpiece machining method.

### Background Art

A laser beam machine including a chip conveyor is known.

As a related art, Patent Literature 1 discloses a chip conveyor of a laser beam machine. The chip conveyor described in Patent Literature 1 includes a large number of plates that constitute a conveyor belt. Each plate is bendably coupled to another plate by a joint.

### Citation List

### Patent Literature

PTL1: Microfilm of JP Utility Model Application No. H03-19091 (JP H04-108984 U)

### Summary of Invention

### Technical Problem

An object of the present invention is to provide a dross transportation conveyor, a laser beam machine apparatus, and a workpiece machining method, which are capable of eliminating or minimizing thermal deformation of a transportation plate.

### Solution to Problem

A dross transportation conveyor, according to some embodiments, includes: a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of a laser beam on a workpiece; a first temperature rise prevention surface that covers at least a part of the first transportation plate and that either prevents a temperature rise of the first transportation plate due to energy of the laser beam; and a second temperature rise prevention surface that covers at least a part of the second transportation plate and that either prevents the temperature rise of the second transportation plate due to the energy of the laser beam.

A dross transportation conveyor, according to some embodiments, includes: a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of a laser beam on a workpiece. A main material of the first transportation plate comprises one of copper, a copper alloy, aluminum, or an aluminum alloy, and at least a part of a first transportation surface of the first transportation plate comprises one of the copper, the copper alloy, the aluminum, or the aluminum alloy. A main material of the second transportation plate comprises one of the copper, the copper alloy, the aluminum, or the aluminum alloy, and at least a part of a second transportation surface of the second transportation plate comprises one of the copper, the copper alloy, the aluminum, or the aluminum alloy.

A laser beam machine apparatus, according to some embodiments, includes: a laser beam irradiator including a laser head that irradiates a workpiece with a laser beam; a mover that moves the leaser head relative to a workpiece support component that supports the workpiece; a controller configured to control the laser beam irradiator and the mover; and a dross transportation conveyor. The dross transportation conveyor includes: a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of the laser beam on the workpiece; a first temperature rise prevention surface that covers at least a part of the first transportation plate and that either prevents a temperature rise of the first transportation plate due to energy of the laser beam; and a second temperature rise prevention surface that covers at least a part of the second transportation plate and that either prevents the temperature rise of the second transportation plate due to the energy of the laser beam.

A workpiece machining method, according to some embodiments, includes the steps of: machining a workpiece by irradiating the workpiece with a laser beam; and transporting dross generated by irradiating the workpiece with the laser beam, by using a group of transportation plates including a first transportation plate and a second transportation plate, the first transportation plate extending in a first direction, the second transportation plate being disposed to be adjacent to the first transportation plate and extending in the first direction. The step of machining the workpiece is performed in a state in which a temperature rise of the first transportation plate due to energy of the laser beam is either prevented by a first temperature rise prevention surface that covers at least a part of the first transportation plate. The step of machining the workpiece is performed in a state in which the temperature rise of the second transportation plate due to the energy of the laser beam is either prevented by a second temperature rise prevention surface that covers at least a part of the second transportation plate.

### Effects of Invention

According to the present invention, it becomes possible to provide a dross transportation conveyor, a laser beam machine apparatus, and a workpiece machining method, which are capable of eliminating or minimizing thermal deformation of a transportation plate.

### Brief Description of Drawings

[FIG. 1] FIG. 1 is a schematic cross-sectional view of a laser beam machine apparatus according to a first embodiment.
[FIG. 2] FIG. 2 is a schematic cross-sectional view of a part of the laser beam machine apparatus according to the first embodiment.
[FIG. 3] FIG. 3 is a schematic cross-sectional view of a part of a laser beam machine apparatus in a comparative example.
[FIG. 4] FIG. 4 is a schematic perspective view of the laser beam machine apparatus according to the first embodiment.
[FIG. 5] FIG. 5 is a schematic perspective view of a state in which a group of transportation plates, including a first transportation plate and a second transportation plate, is movable along a circling orbit.
[FIG. 6] FIG. 6 is a schematic perspective view of a dross transportation conveyor according to the first embodiment.
[FIG. 7] FIG. 7 is an exploded perspective view of a part of the group of transportation plates, schematically illustrating the part of the group of transportation plates.
[FIG. 8] FIG. 8 is a schematic illustration of a state in which the first transportation plate is attached to a first endless chain and a second endless chain.
[FIG. 9] FIG. 9 is a schematic cross-sectional view for describing the first transportation plate and the second transportation plate.
[FIG. 10] FIG. 10 is a schematic perspective view for describing the first transportation plate and the second transportation plate.
[FIG. 11] FIG. 11 is an enlarged schematic cross-sectional view of a turn-around portion of the dross transportation conveyor according to the first embodiment.
[FIG. 12] FIG. 12 is a schematic cross-sectional view of a part of the laser beam machine apparatus according to the first embodiment.
[FIG. 13] FIG. 13 is a schematic perspective view for describing a first example of a temperature rise prevention surface.
[FIG. 14] FIG. 14 is a schematic cross-sectional view of a part of the laser beam machine apparatus according to the first embodiment.
[FIG. 15] FIG. 15 is a schematic cross-sectional view of a part of the laser beam machine apparatus according to the first embodiment.
[FIG. 16] FIG. 16 is a schematic perspective view for describing a second example of the temperature rise prevention surface.
[FIG. 17] FIG. 17 is a schematic cross-sectional view of a part of the laser beam machine apparatus according to the first embodiment.
[FIG. 18] FIG. 18 is a schematic cross-sectional view of a part of the laser beam machine apparatus according to the first embodiment.
[FIG. 19] FIG. 19 is a schematic cross-sectional view of a part of the laser beam machine apparatus according to the first embodiment.
[FIG. 20] FIG. 20 is a schematic perspective view for describing a fourth example of the temperature rise prevention surface.
[FIG. 21] FIG. 21 is a schematic perspective view for describing the fourth example of the temperature rise prevention surface.
[FIG. 22] FIG. 22 is a schematic perspective view for describing the fourth example of the temperature rise prevention surface.
[FIG. 23] FIG. 23 is a schematic perspective view for describing the fourth example of the temperature rise prevention surface.
[FIG. 24] FIG. 24 is a schematic cross-sectional view of a part of the laser beam machine apparatus according to the first embodiment.
[FIG. 25] FIG. 25 is a schematic cross-sectional view of a state in which a circling orbit of the group of transportation plates includes an upward inclination.
[FIG. 26] FIG. 26 is a schematic side view of the laser beam machine apparatus according to the first embodiment.
[FIG. 27] FIG. 27 is a schematic plan view of a part of the laser beam machine apparatus according to the first embodiment.
[FIG. 28] FIG. 28 is a schematic perspective view of a part of a workpiece support component.
[FIG. 29] FIG. 29 is a schematic perspective view of a laser beam machine apparatus according to a first modification of the first embodiment.
[FIG. 30] FIG. 30 is a schematic plan view of a state in which a machined workpiece is removed from the workpiece support component.
[FIG. 31] FIG. 31 is a schematic perspective view of a laser beam machine apparatus according to a second modification of the first embodiment.
[FIG. 32] FIG. 32 is a schematic illustration of a state in which a controller is capable of controlling a plurality of pieces of to-be-controlled equipment.
[FIG. 33] FIG. 33 is a schematic side view of the laser beam machine apparatus according to the first embodiment.
[FIG. 34] FIG. 34 is a schematic cross-sectional view of a part of the laser beam machine apparatus including a cooler.
[FIG. 35] FIG. 35 is a schematic cross-sectional view of a laser beam machine apparatus according to a second embodiment.
[FIG. 36] FIG. 36 is a schematic cross-sectional view of a part of the laser beam machine apparatus according to the second embodiment.
[FIG. 37] FIG.37 is an exploded perspective view of a part of the group of transportation plates.
[FIG. 38] FIG. 38 is a schematic perspective view of a state in which the group of transportation plates, including the first transportation plate and the second transportation plate, is movable along the circling orbit.
[FIG. 39] FIG. 39 is a schematic cross-sectional view of a part of the laser beam machine apparatus according to the second embodiment.
[FIG. 40] FIG. 40 is a schematic cross-sectional view of a part of the laser beam machine apparatus according to the second embodiment.
[FIG. 41] FIG. 41 is a schematic cross-sectional view of a part of the laser beam machine apparatus according to the second embodiment.
[FIG. 42] FIG. 42 is a flowchart illustrating an example of a workpiece machining method according to a third embodiment.

### Description of Embodiments

Hereinafter, a dross transportation conveyor 2, a laser beam machine apparatus 1, and a workpiece machining method according to embodiments will be described with reference to the drawings. It is to be noted that in the following description of the embodiments, portions and members having the same functions are denoted by the same reference numerals, and repeated descriptions of the portions and members denoted by the same reference numerals will be omitted.

### (Definition of Terms)

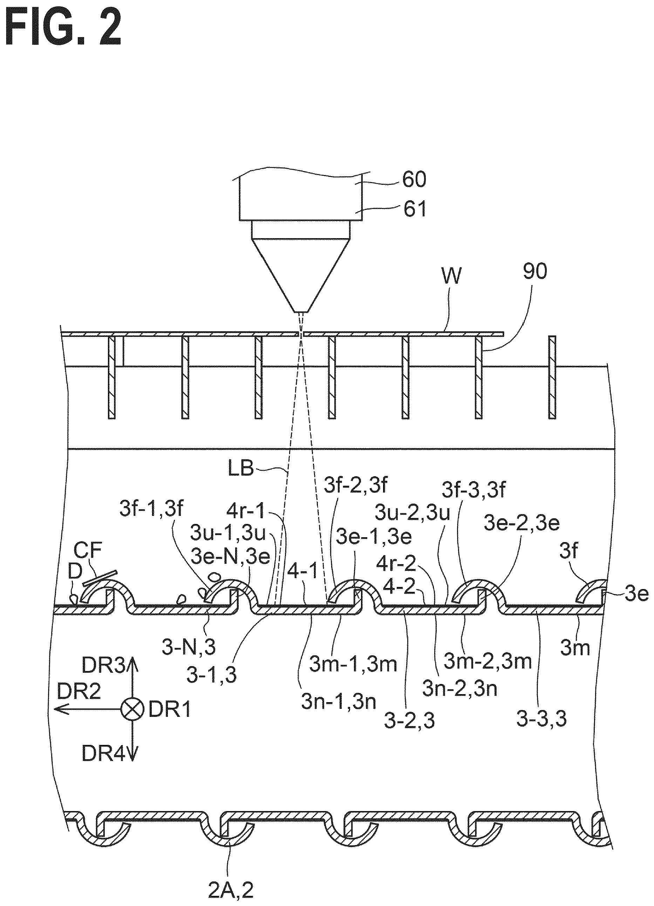

As illustrated in FIG. 2, each transportation plate 3 in a group of transportation plates 3 has a transportation surface 3u. Herein, the transportation surface means a surface that supports dross directly or indirectly in transporting the dross. More specifically, the transportation surface 3u is a surface that faces substantially upward in transporting the dross.

As illustrated in FIG. 2, each transportation plate 3 in the group of transportation plates 3 has a back surface 3n. Herein, the back surface means a surface opposite to the transportation surface 3u in each transportation plate. More specifically, the back surface 3n is a surface that faces substantially downward, in transporting the dross.

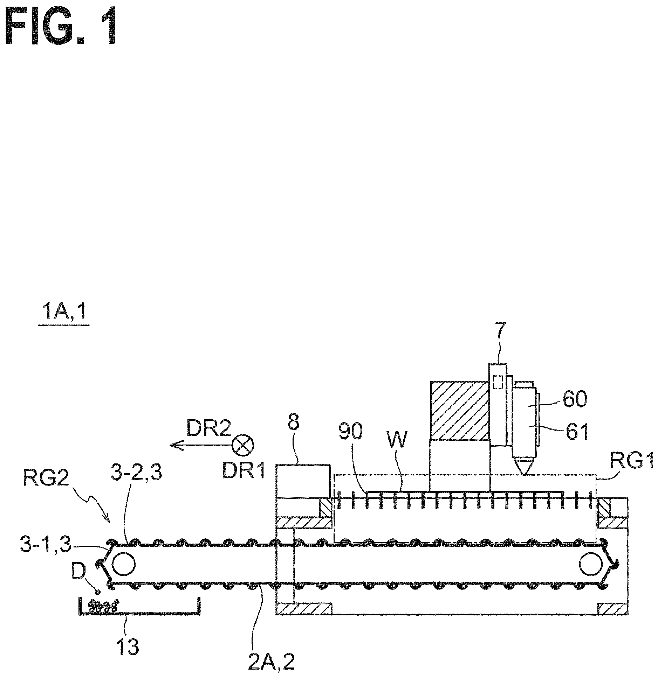

Herein, a "machine region RG1" is defined as a region that is reachable by a laser beam emitted from a laser beam irradiator 60 (see FIG. 1). A workpiece W, which is arranged in the machine region RG1, is machined (more specifically, cut or drilled) by a laser beam. The dross generated by irradiation of the laser beam on the workpiece W is received by the group of transportation plates 3 in the machine region RG1.

### (Definition of Directions)

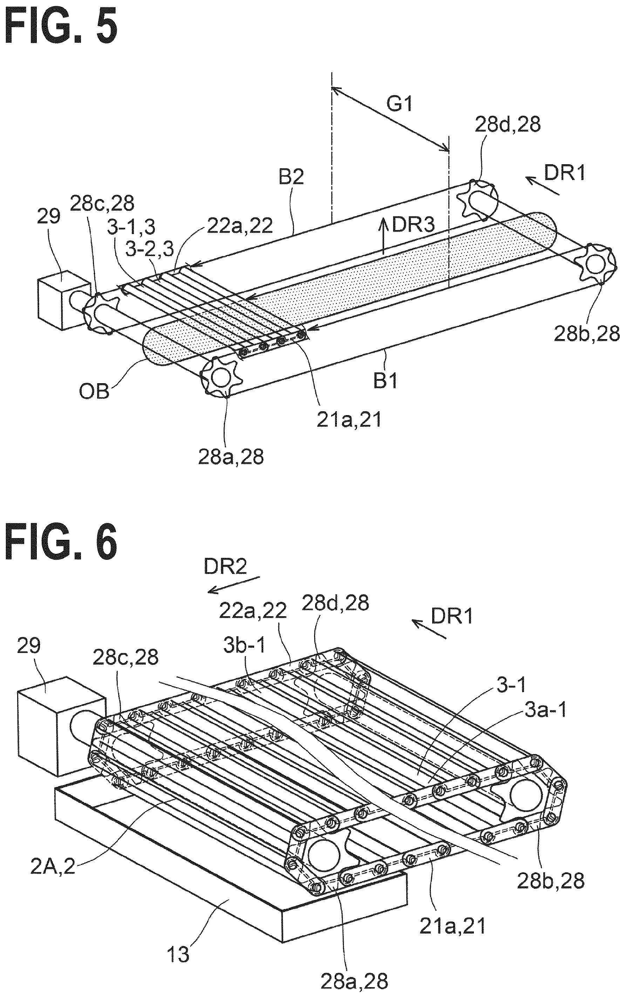

Herein, a first direction DR1 is defined as an extending direction of the first transportation plate 3-1 (or an extending direction of each transportation plate 3). Herein, a second direction DR2 is defined as a moving direction of the group of transportation plates 3 (or a moving direction of each transportation plate 3). As illustrated in FIG. 5, herein, a third direction DR3 is defined as a direction from the inside of a circling orbit OB of the group of transportation plates 3 (see a portion hatched with dots in FIG. 5) toward the outside of the circling orbit OB, and a fourth direction DR4 is defined as a direction opposite to the third direction DR3. As illustrated in FIG. 2, the third direction DR3 denotes a direction from the first back surface 3n-1 of the first transportation plate 3-1 toward the first transportation surface 3u-1 of the first transportation plate 3-1. The third direction DR3 also denotes a direction from the second back surface 3n-2 of the second transportation plate 3-2 toward the second transportation surface 3u-2 of the second transportation plate 3-2. As illustrated in FIG. 2, the fourth direction DR4 denotes a direction from the first transportation surface 3u-1 of the first transportation plate 3-1 toward the first back surface 3n-1 of the first transportation plate 3-1. The fourth direction DR4 also denotes a direction from the second transportation surface 3u-2 of the second transportation plate 3-2 toward the second back surface 3n-2 of the second transportation plate 3-2.

### (First Embodiment)

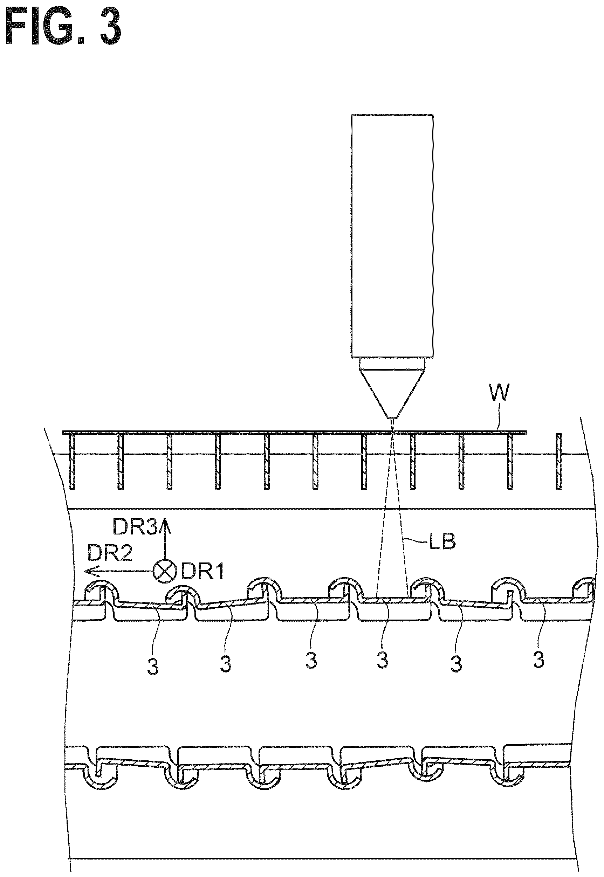

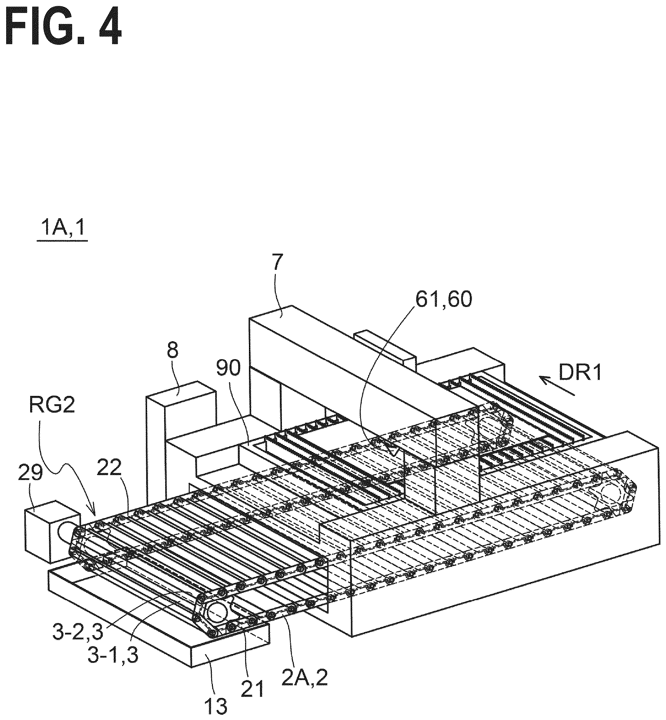

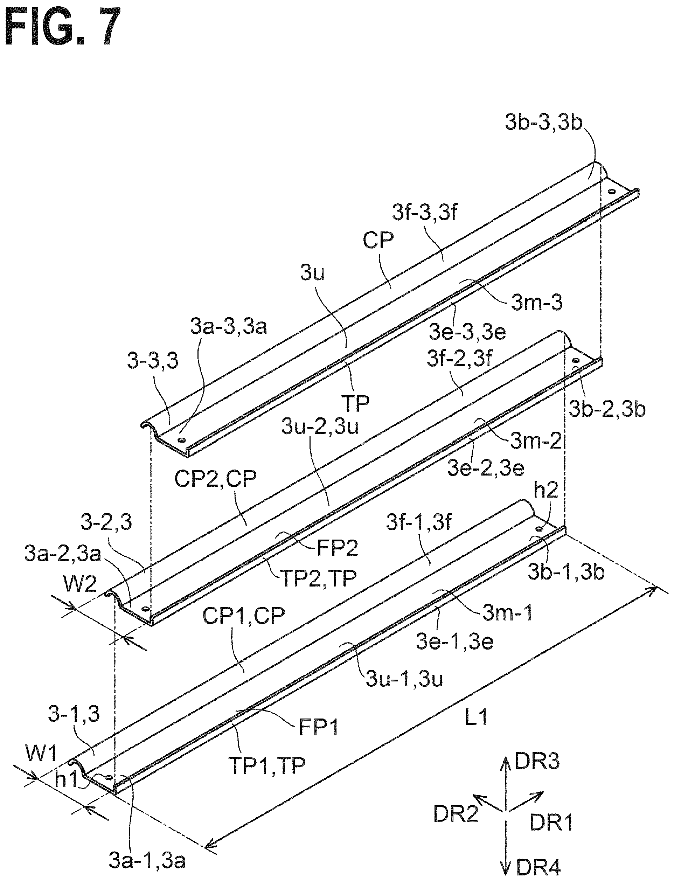

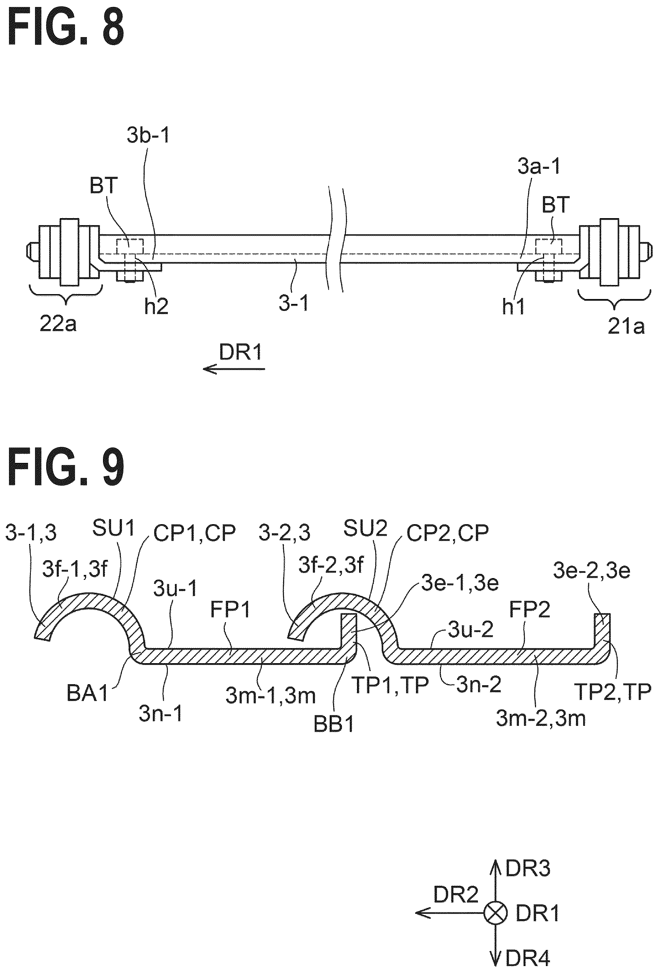

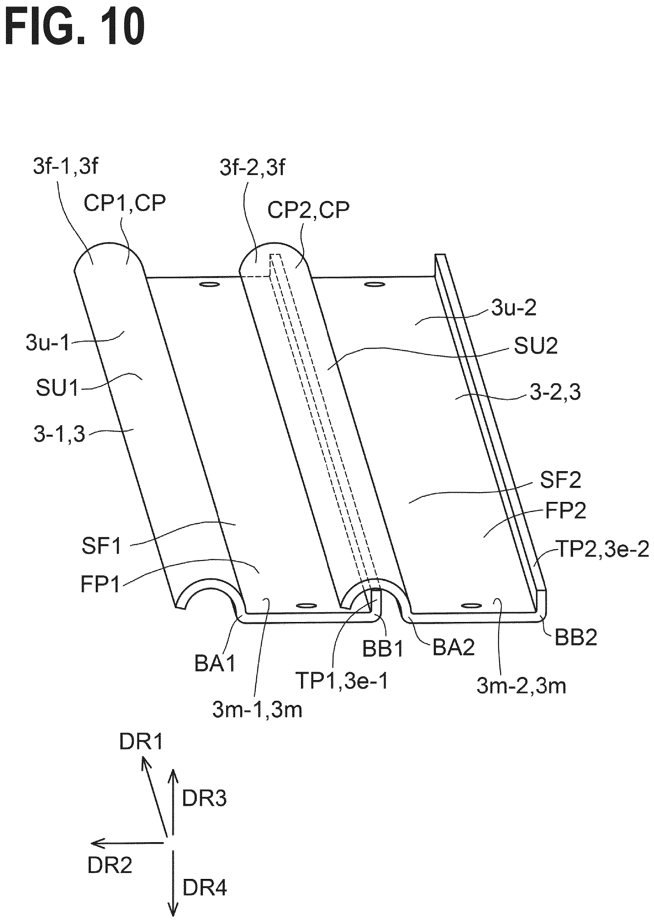

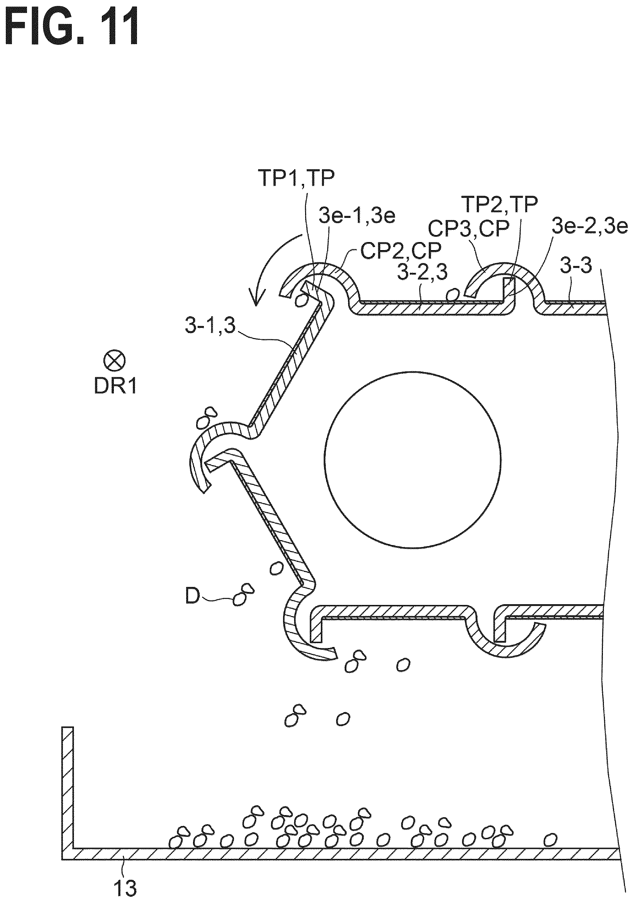

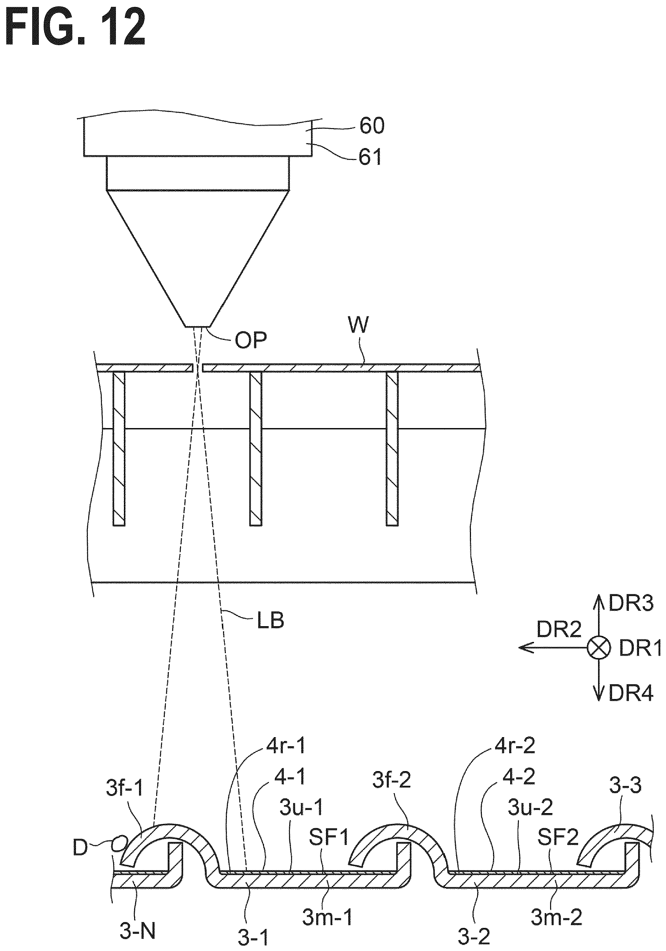

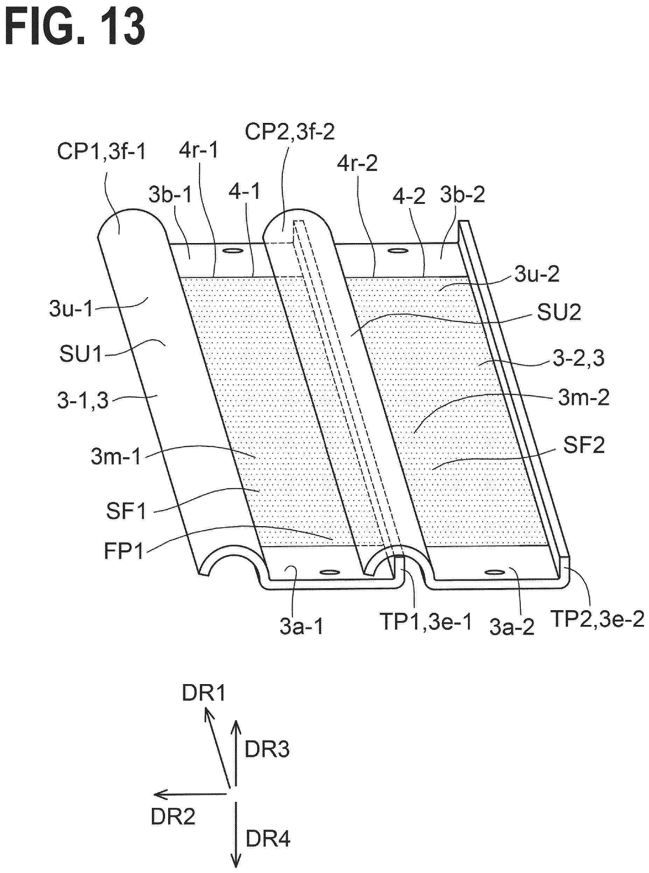

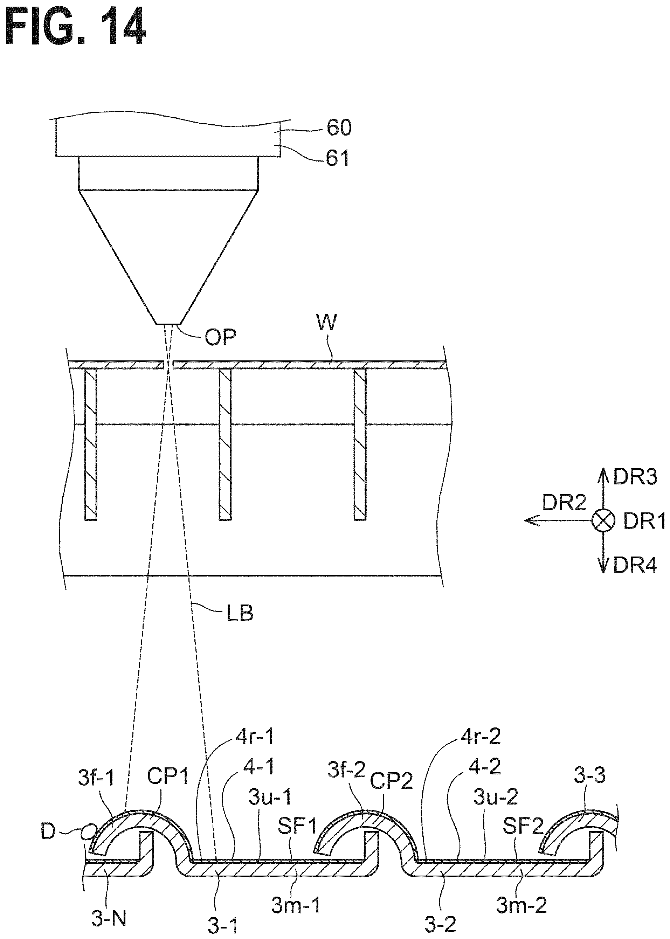

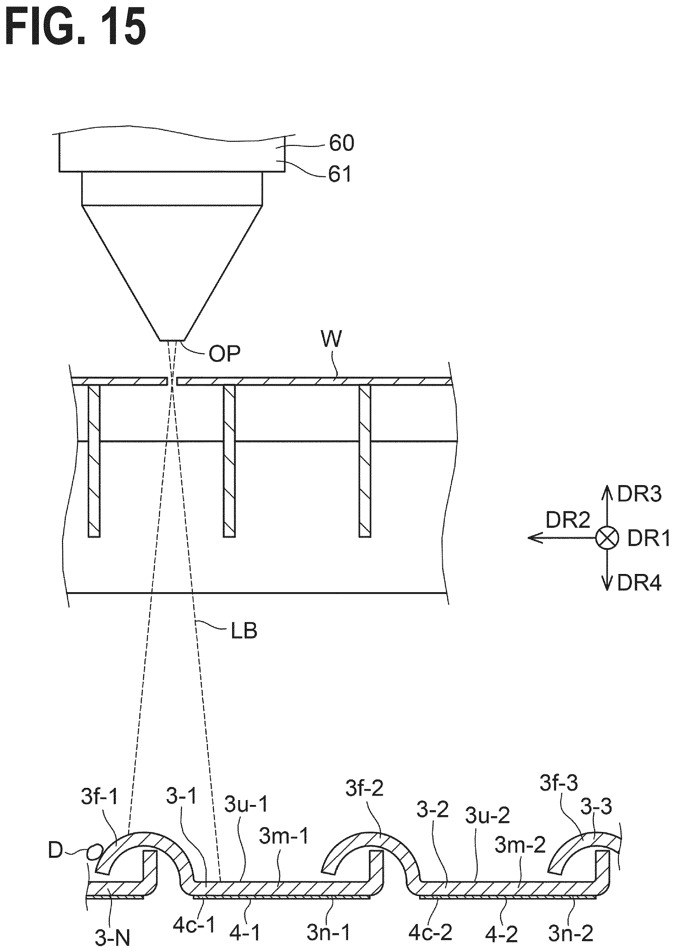

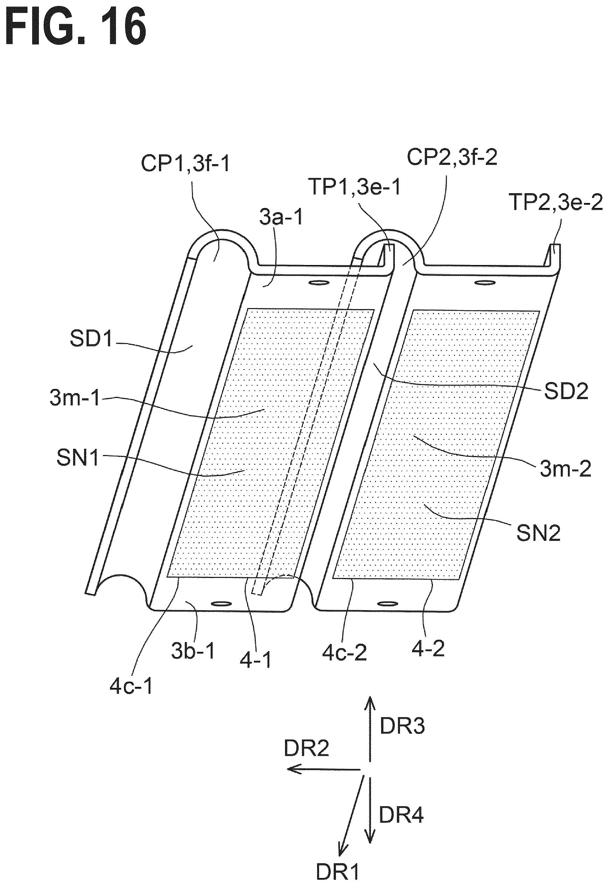

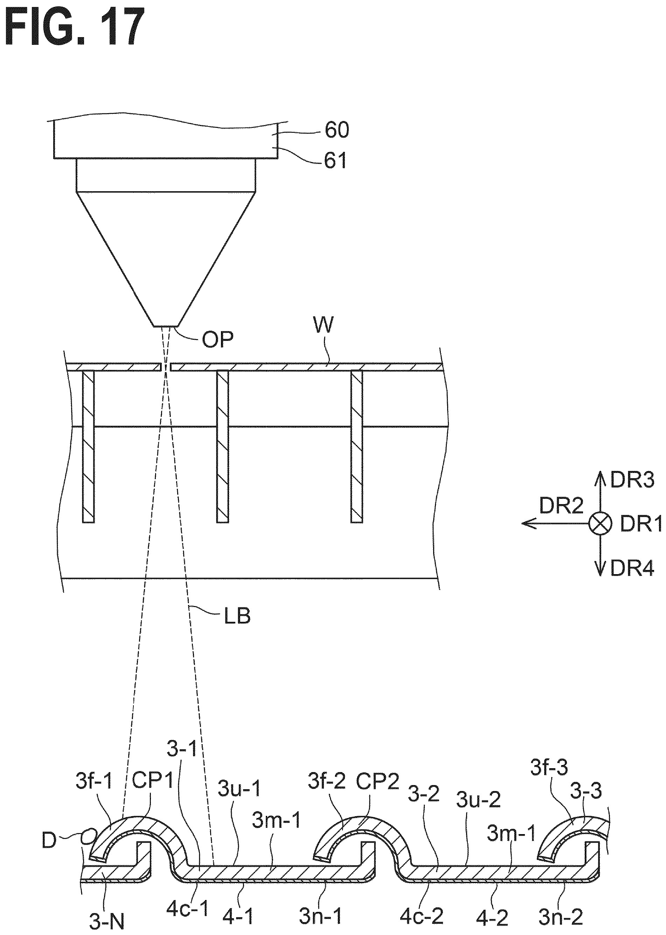

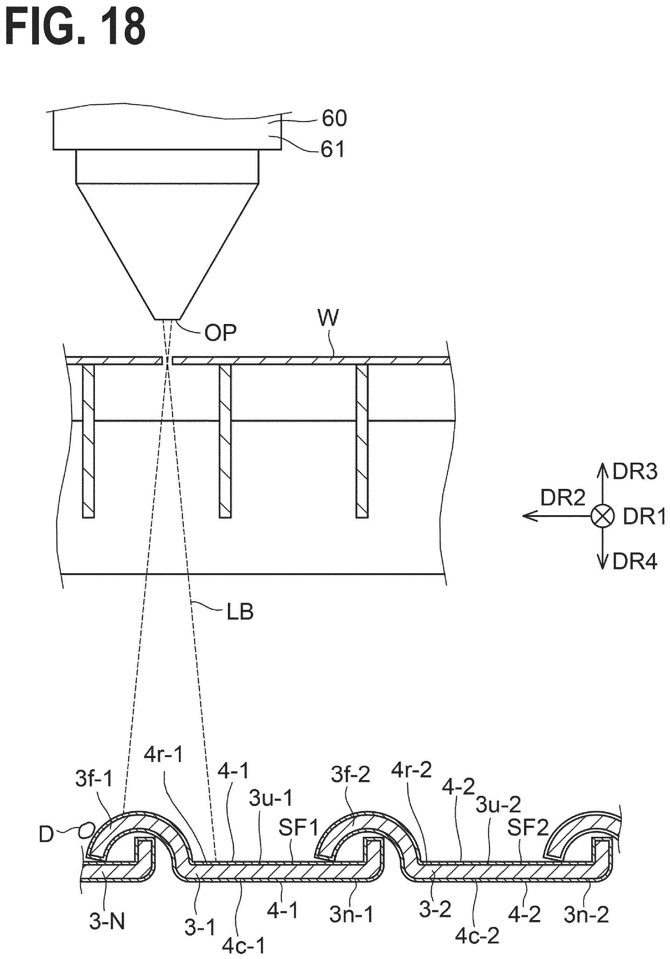

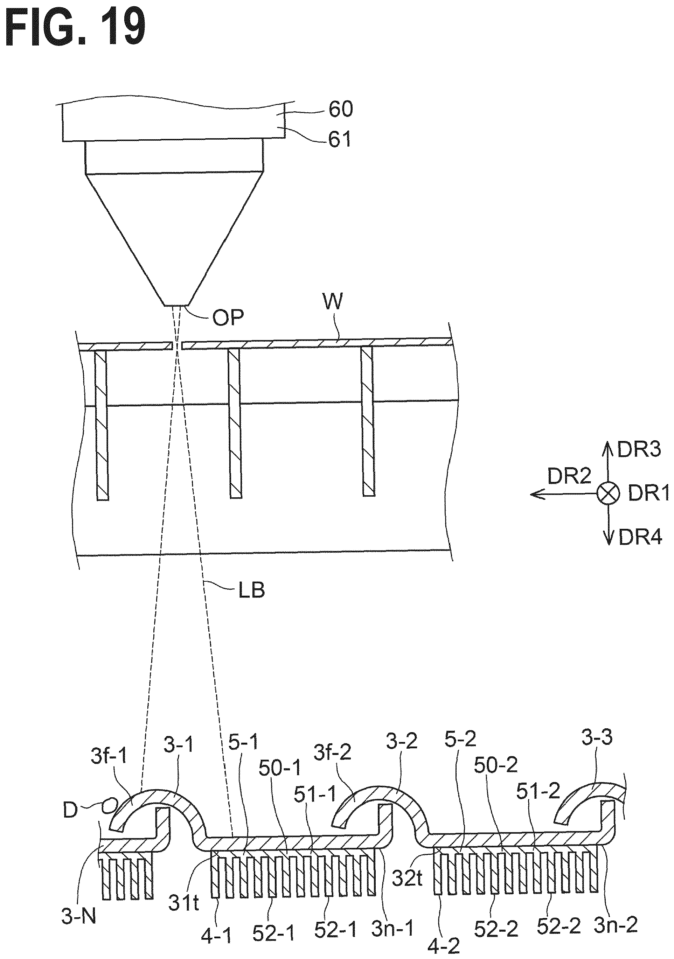

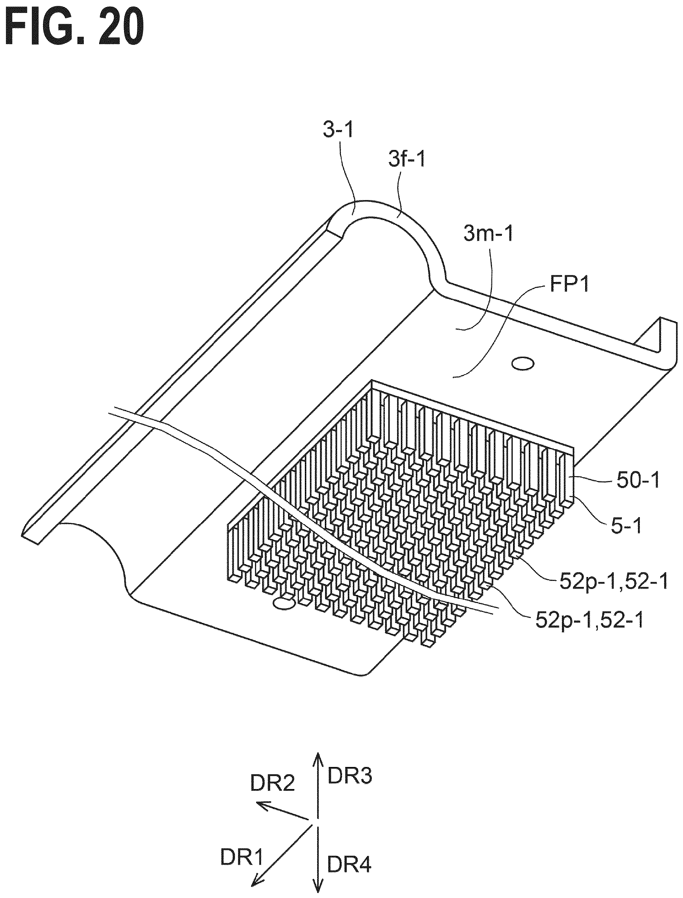

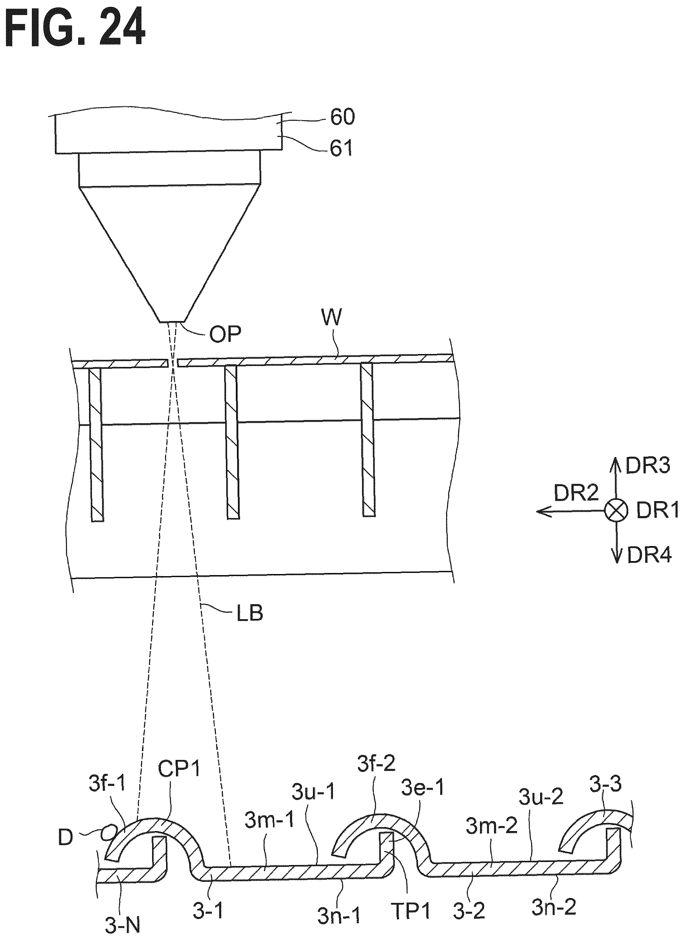

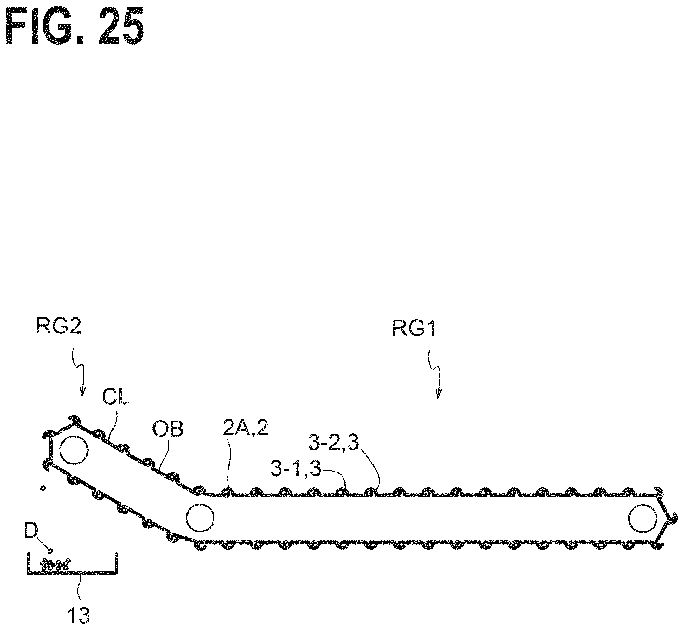

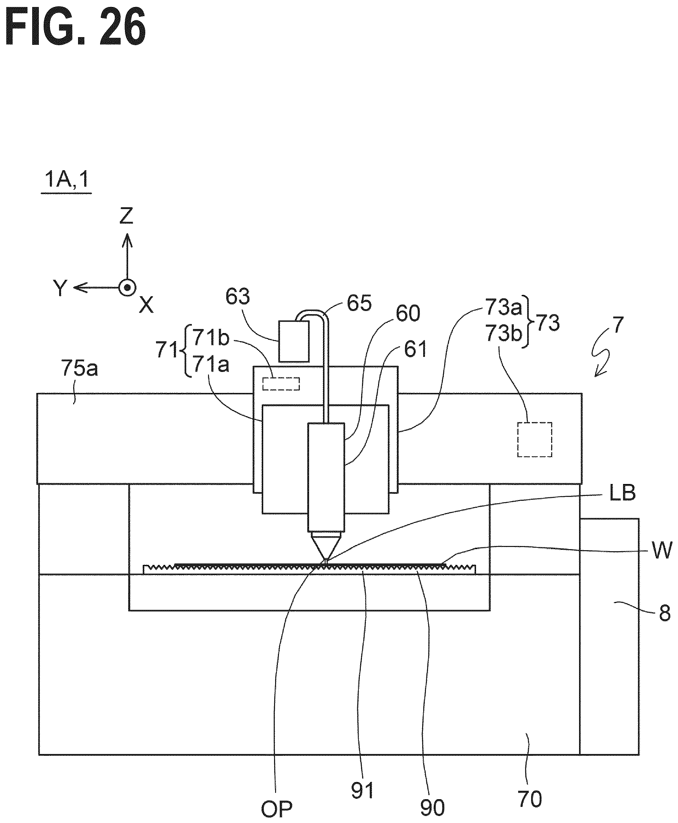

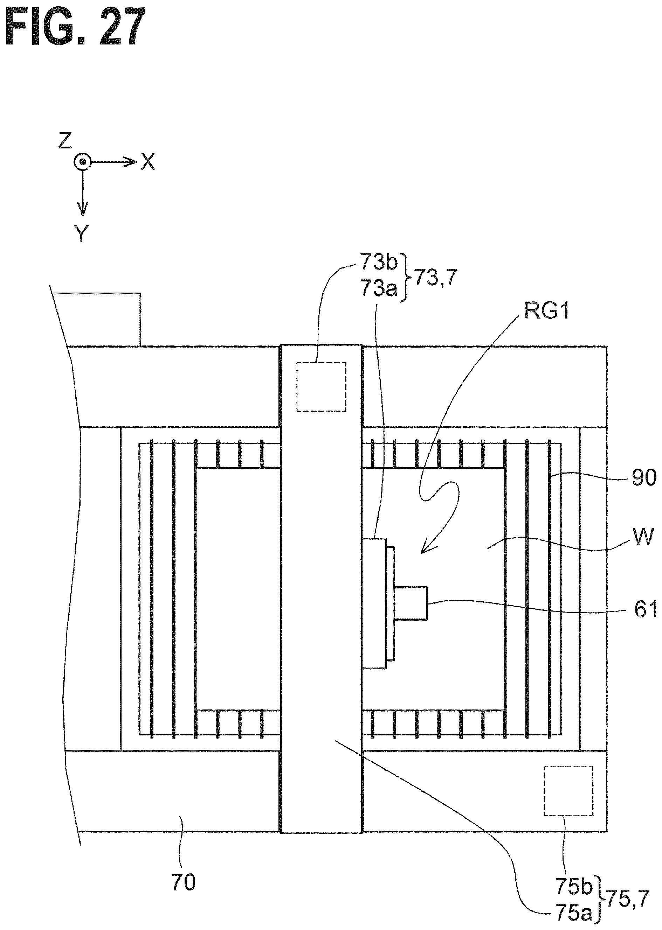

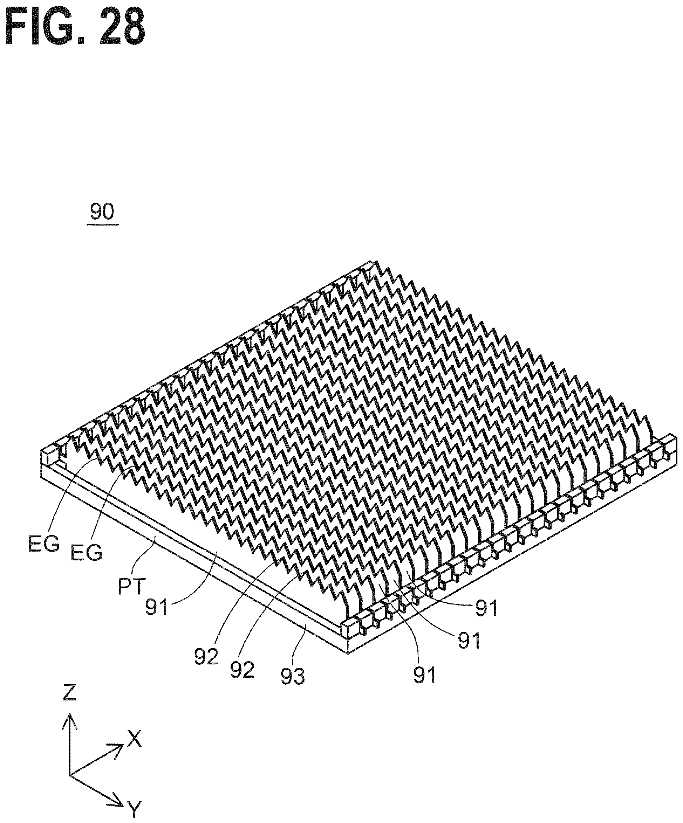

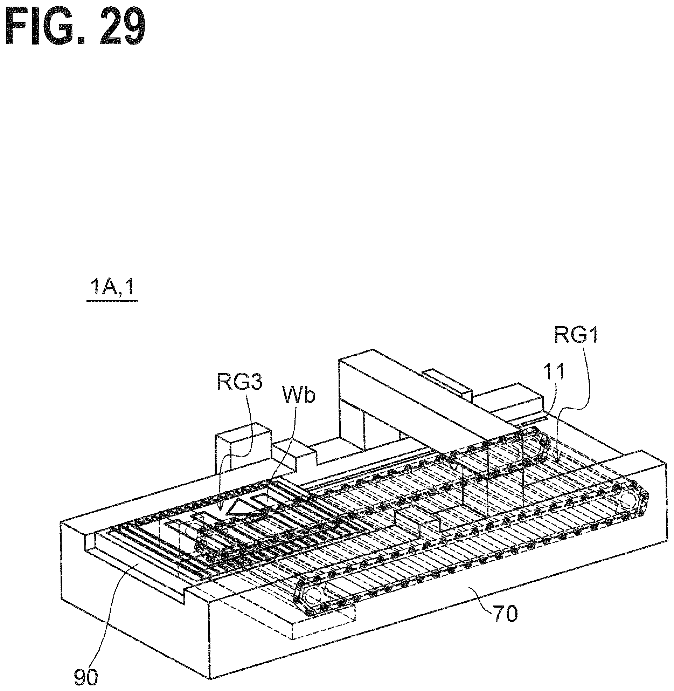

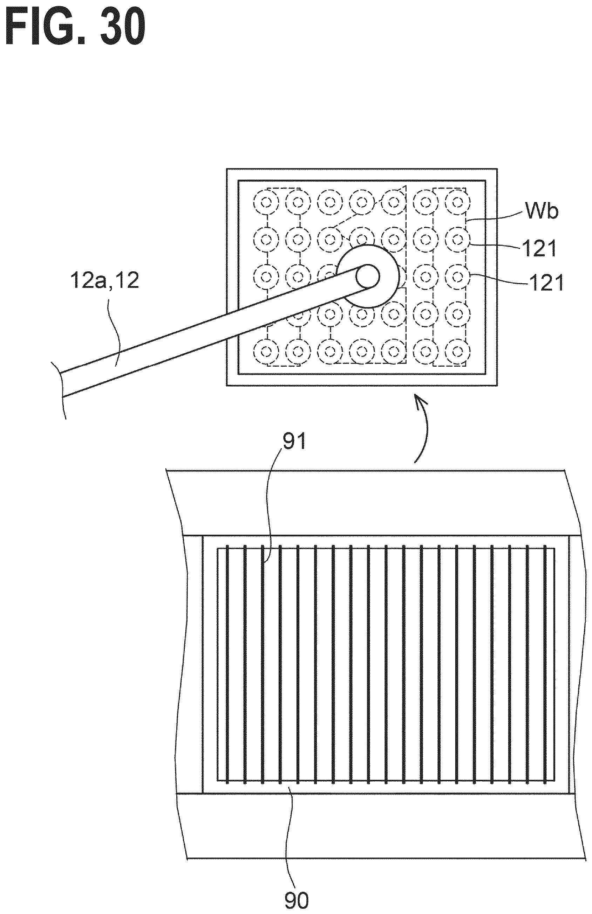

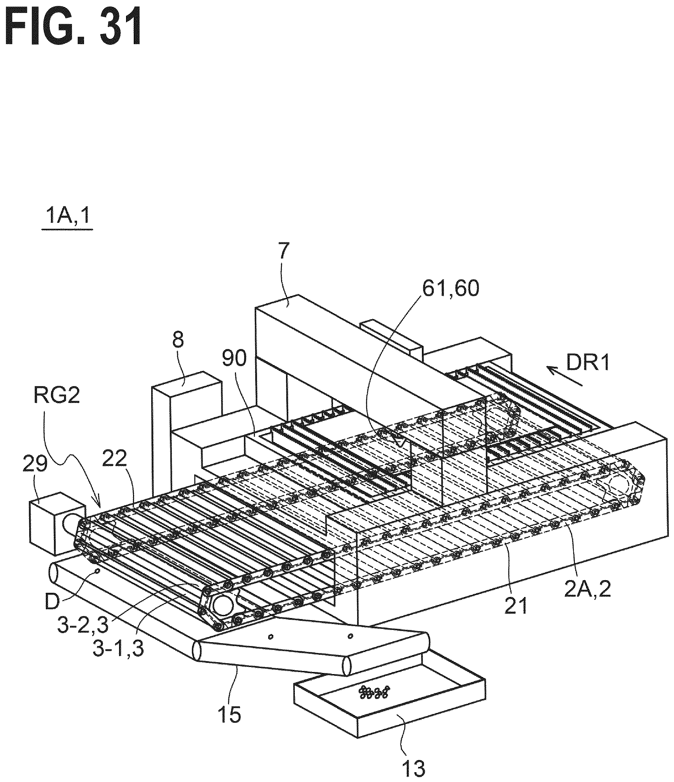

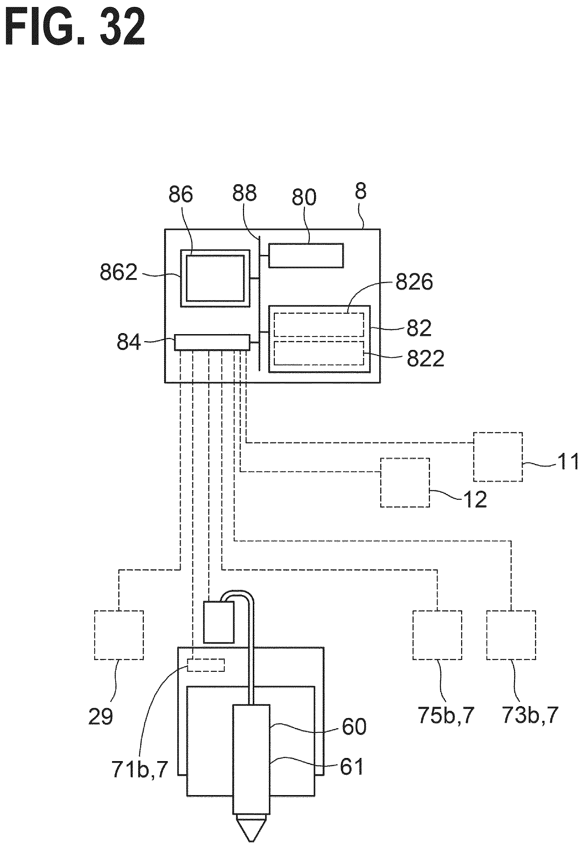

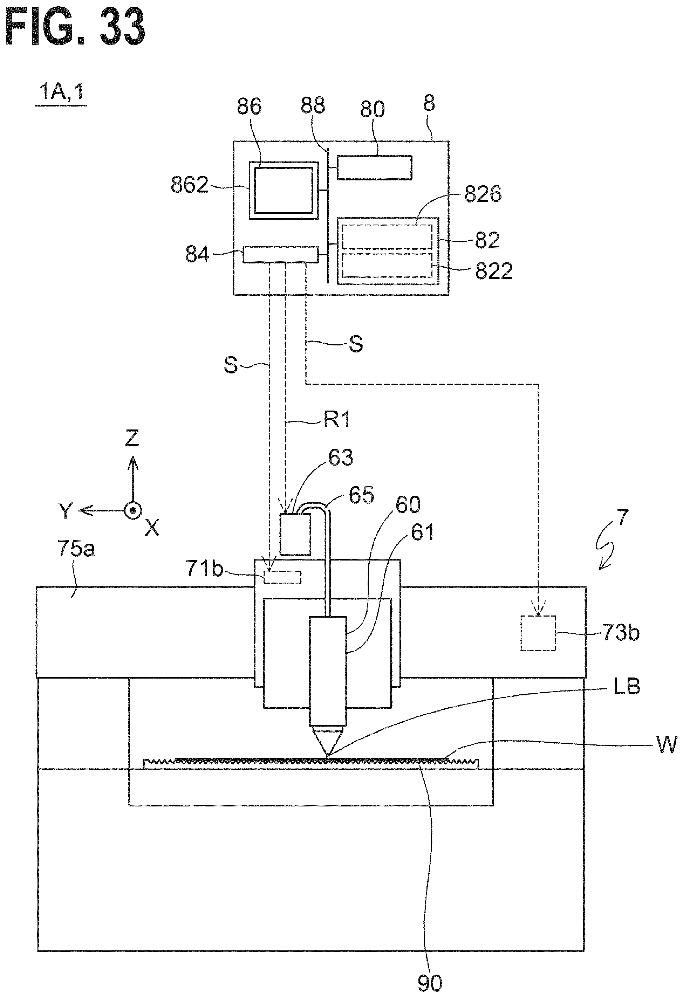

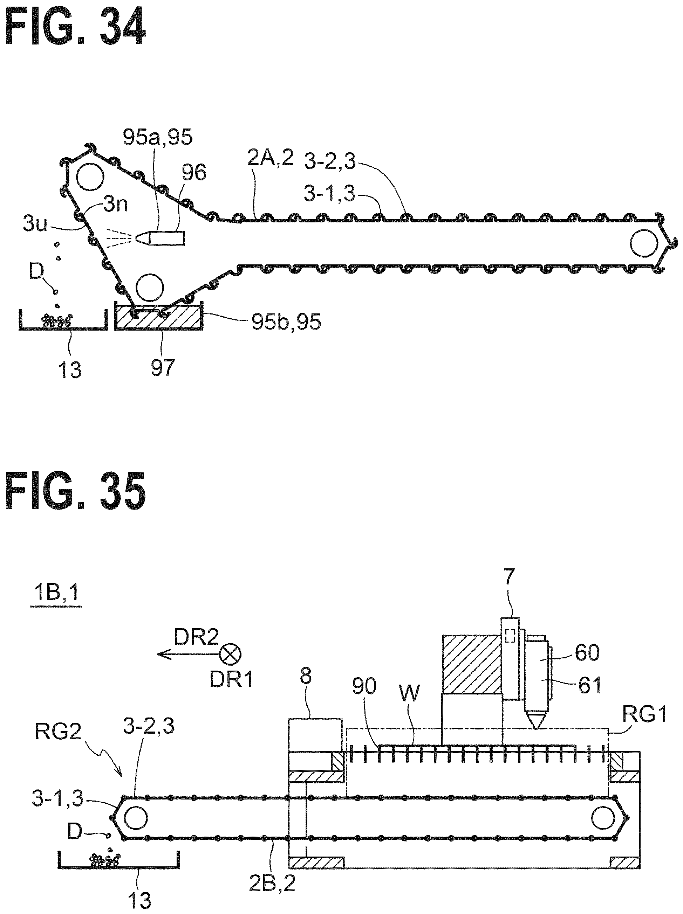

Referring to FIGs. 1 to 34, a dross transportation conveyor 2A and the laser beam machine apparatus 1A according to the first embodiment will be described. FIG. 1 is a schematic cross-sectional view of the laser beam machine apparatus 1A according to the first embodiment. FIG. 2 is a schematic cross-sectional view of a part of the laser beam machine apparatus 1A according to the first embodiment. FIG. 3 is a schematic cross-sectional view of a part of a laser beam machine apparatus in a comparative example. FIG. 4 is a schematic perspective view of the laser beam machine apparatus 1 according to the first embodiment. FIG. 5 is a schematic perspective view of a state in which the group of transportation plates 3, including the first transportation plate 3-1 and the second transportation plate 3-2, is movable along the circling orbit OB. FIG. 6 is a schematic perspective view of the dross transportation conveyor 2A according to the first embodiment. FIG. 7 is an exploded perspective view of a part of the group of transportation plates 3, schematically illustrating the part of the group of transportation plates 3. FIG. 8 is a schematic illustration of a state in which the first transportation plate 3-1 is attached to a first endless chain 21a and a second endless chain 22a. FIG. 9 is a schematic cross-sectional view for describing the first transportation plate 3-1 and the second transportation plate 3-2. FIG. 10 is a schematic perspective view for describing the first transportation plate 3-1 and the second transportation plate 3-2. FIG. 11 is an enlarged schematic cross-sectional view of a turn-around portion of the dross transportation conveyor 2A according to the first embodiment. FIG. 12 is a schematic cross-sectional view of a part of the laser beam machine apparatus 1A according to the first embodiment. FIG. 13 is a schematic perspective view for describing a first example of a temperature rise prevention surface. FIG. 14 is a schematic cross-sectional view of a part of the laser beam machine apparatus 1A according to the first embodiment. FIG. 15 is a schematic cross-sectional view of a part of the laser beam machine apparatus 1A according to the first embodiment. FIG. 16 is a schematic perspective view for describing a second example of the temperature rise prevention surface. FIG. 17 is a schematic cross-sectional view of a part of the laser beam machine apparatus 1A according to the first embodiment. FIG. 18 is a schematic cross-sectional view of a part of the laser beam machine apparatus 1A according to the first embodiment. FIG. 19 is a schematic cross-sectional view of a part of the laser beam machine apparatus 1A according to the first embodiment. FIGs. 20 to 23 are each a schematic perspective view for describing a fourth example of the temperature rise prevention surface. FIG. 24 is a schematic cross-sectional view of a part of the laser beam machine apparatus 1A according to the first embodiment. FIG. 25 is a schematic cross-sectional view of a state in which a circling orbit OB of the group of transportation plates 3 includes an upward inclination CL. FIG. 26 is a schematic side view of the laser beam machine apparatus 1A according to the first embodiment. FIG. 27 is a schematic plan view of a part of the laser beam machine apparatus 1A according to the first embodiment. FIG. 28 is a schematic perspective view of an example of a workpiece support component 90. FIG. 29 is a schematic perspective view of a laser beam machine apparatus 1A according to a first modification of the first embodiment. FIG. 30 is a schematic plan view of a state in which a machined workpiece Wb is removed from the workpiece support component 90. FIG. 31 is a schematic perspective view of a laser beam machine apparatus 1A according to a second modification of the first embodiment. FIG. 32 is a schematic illustration of a state in which a controller 8 is capable of controlling a plurality of pieces of to-be-controlled equipment. FIG. 33 is a schematic side view of the laser beam machine apparatus 1A according to the first embodiment. FIG. 34 is a schematic cross-sectional view of a part of the laser beam machine apparatus including a cooler 95.

As illustrated in FIG. 2, the dross transportation conveyor 2A according to the first embodiment includes the group of transportation plates 3.

The group of transportation plates 3 transports dross D, which is generated by irradiation of a laser beam LB on the workpiece W. In addition to the dross D, the group of transportation plates 3 may transport cut-off pieces CF, which are generated by the irradiation of the laser beam LB on the workpiece W.

It is to be noted that herein, the dross means a mass having an irregular shape (in other words, a mass having a random shape) formed by solidification of a material (more specifically, a metal material) that has been melted by the irradiation of the laser beam.

The group of transportation plates 3 includes: the first transportation plate 3-1, which extends in the first direction DR1; and the second transportation plate 3-2, which extends in the first direction DR1. Each transportation plate 3 in the group of transportation plates 3 is an elongated plate with the first direction DR1 as its longitudinal direction. In an example illustrated in FIG. 2, the second transportation plate 3-2 is disposed to be adjacent to the first transportation plate 3-1.

In the example illustrated in FIG. 2, the laser beam LB, which passes through the workpiece W, reaches the dross transportation conveyor 2A. As illustrated in FIG. 3, when the laser beam LB reaches the transportation plate 3, the transportation plate 3 is thermally deformed. In an example illustrated in FIG. 3, due to the laser beam LB reaching each of the plurality of transportation plates 3, the plurality of transportation plates 3 are irregularly deflected in the third direction DR3 (more specifically, deflected due to thermal deformation). The transportation plate 3 is designed to prevent excessive deflection, and has sufficient resistance to the thermal deformation. In particular, the transportation plate 3 having a shape as illustrated in FIG. 3 has high rigidity in bending, and is hardly deflected. However, if the output of the laser beam LB is further increased or the energy density of the laser beam LB is further increased, the thermal deformation may become excessive even though the transportation plate 3 has the shape as illustrated in FIG. 3. In addition, if the thermal deformation of the transportation plate 3 becomes excessive, smooth movements of the group of transportation plates 3 may be hindered.

As illustrated in FIG. 2, the dross transportation conveyor 2A according to the first embodiment includes a first temperature rise prevention surface 4-1 and a second temperature rise prevention surface 4-2.

The first temperature rise prevention surface 4-1 covers at least a part of the surface of the first transportation plate 3-1. In addition, the first temperature rise prevention surface 4-1 prevents a temperature rise of the first transportation plate 3-1 due to the energy of the laser beam LB. In the example illustrated in FIG. 2, the first temperature rise prevention surface 4-1 includes a surface of a first laser beam reflection layer 4r-1, which covers at least a part of the first transportation surface 3u-1 of the first transportation plate 3-1.

The second temperature rise prevention surface 4-2 covers at least a part of the surface of the second transportation plate 3-2. In addition, the second temperature rise prevention surface 4-2 prevents a temperature rise of the second transportation plate 3-2 due to the energy of the laser beam LB. In the example illustrated in FIG. 2, the second temperature rise prevention surface 4-2 includes a surface of a second laser beam reflection layers 4r-2, which covers at least a part of the second transportation surface 3u-2 of the second transportation plate 3-2.

In the dross transportation conveyor 2A according to the first embodiment, the first laser beam reflection layer 4r-1, which covers at least a part of the first transportation surface 3u-1, effectively reflects the laser beam LB emitted from the laser beam irradiator 60. In this manner, heat input into the first transportation plate 3-1 is prevented, and the thermal deformation and deflection of the first transportation plate 3-1 are prevented. Further, the second laser beam reflection layer 4r-2, which covers at least a part of the second transportation surface 3u-2, effectively reflects the laser beam LB emitted from the laser beam irradiator 60. In this manner, heat input into the second transportation plate 3-2 is prevented, and the thermal deformation and deflection of the second transportation plate 3-2 are prevented. Therefore, the group of transportation plates 3 including the first transportation plate 3-1 and the second transportation plate 3-2 can be smoothly moved.

As illustrated in FIG. 1, the laser beam machine apparatus 1A according to the first embodiment includes: the above-described dross transportation conveyor 2A; the laser beam irradiator 60 including a laser head 61, which irradiates the workpiece W with the laser beam LB; a mover 7, which moves the laser head 61 relative to a workpiece support component 90 for supporting the workpiece W; and a controller 8, which controls the laser beam irradiator 60 and the mover 7. It is to be noted that one computer may function as the controller 8, or a plurality of computers may cooperate with each other to function as the controller 8.

The laser beam machine apparatus 1A according to the first embodiment has the same effects as those of the dross transportation conveyor 2A according to the first embodiment.

### (Optional and Additional Configurations)

Subsequently, referring to FIGs. 1 to 34, optional and additional configurations that are adoptable in the dross transportation conveyor 2A and the laser beam machine apparatus 1A according to the first embodiment (or a dross transportation conveyor 2B and a laser beam machine apparatus 1B according to a second embodiment to be described later) will be described.

### (Dross Transportation Conveyor 2A)

In the example illustrated in FIG. 1, the dross transportation conveyor 2A is partially disposed immediately below the laser beam irradiator 60. In addition, the group of transportation plates 3 of the dross transportation conveyor 2A is configured to be movable across the machine region RG1 (more specifically, a region immediately below the laser beam irradiator 60).

In the example illustrated in FIG. 1, the group of transportation plates 3 transports the dross from the machine region RG1 to a discharge region RG2. In the example illustrated in FIG. 1, each transportation plate 3 in the group of transportation plates 3 is reversed (more specifically, makes a turn by 180 degrees around a horizontal shaft) in the discharge region RG2. As a result, the dross D transported by the group of transportation plates 3 is discharged to a container 13 from the group of transportation plates 3 in the discharge region RG2. It is to be noted that when the cut-off pieces CF (see FIG. 2) are transported by the group of transportation plates 3, the cut-off pieces CF are also discharged to the container 13 from the group of transportation plates 3 in the discharge region RG2.

In an example illustrated in FIG. 4, the dross transportation conveyor 2A includes: a first endless component 21; a second endless component 22; and a driver 29. The first endless component 21 and the second endless component 22 support the group of transportation plates 3. More specifically, the group of transportation plates 3 is attached to the first endless component 21 and the second endless component 22.

The first endless component 21 and the second endless component 22 are directly or indirectly driven by the driver 29. More specifically, the first endless component 21 is driven to move along a first circling orbit B1 (see FIG. 5) directly or indirectly by the driver 29, and the second endless component 22 is driven to move along a second circling orbit B2 (see FIG. 5), which is parallel to the first circling orbit B1, directly or indirectly by the driver 29. A gap G1 between the first circling orbit B1 and the second circling orbit B2 (in other words, a distance between the first circling orbit B1 and the second circling orbit B2 in the direction along the first direction DR1) is, for example, equal to or longer than one meter and equal to or shorter than three meters.

In an example illustrated in FIG. 6, the first endless component 21 is a first endless chain 21a, and the second endless component 22 is a second endless chain 22a. In the example illustrated in FIG. 6, the dross transportation conveyor 2 includes a plurality of sprockets 28, which includes a first sprocket 28a, a second sprocket 28b, a third sprocket 28c, and a fourth sprocket 28d. The first endless chain 21a is engaged with at least the first sprocket 28a and the second sprocket 28b (more specifically, the first endless chain 21a is wound around at least the first sprocket 28a and the second sprocket 28b). In addition, the second endless chain 22a is engaged with at least the third sprocket 28c and the fourth sprocket 28d (more specifically, the second endless chain 22a is wound around at least the third sprocket 28c and the fourth sprocket 28d).

In the example illustrated in FIG. 6, the first endless chain 21a is driven by the driver 29 via at least the first sprocket 28a, and the second endless chain 22a is driven by the driver 29 via at least the third sprocket 28c.

The group of transportation plates 3 moves along the circling orbit OB. As illustrated in FIG. 5, the circling orbit OB of the group of transportation plates 3 is parallel to the first circling orbit B1 of the first endless chain 21a, and is parallel to the second circling orbit B2 of the second endless chain 22a.

### (Group of Transportation Plates 3)

As illustrated in FIG. 2, each transportation plate 3 in the group of transportation plates 3 transports some of a plurality of pieces of dross D, which are generated by the irradiation of the laser beam LB on the workpiece W, and the temperature of each transportation plate 3 is raised by the laser beam LB. For example, the first transportation plate 3-1 and the second transportation plate 3-2 each transport some of the plurality of pieces of dross D, which are generated by the irradiation of the laser beam LB on the workpiece W, and the temperature of each transportation plate 3 is raised by the laser beam LB. Each transportation plate 3 in the group of transportation plates 3 may be made up of one component, or may be made up of an assembly of a plurality of components.

In an example illustrated in FIG. 2, the dross transportation conveyor 2A includes the group of transportation plates 3, which includes the first transportation plate 3-1, the second transportation plate 3-2, and the third transportation plate 3-3. Each transportation plate 3 in the group of transportation plates 3 extends along the first direction DR1. The number of the transportation plates 3 included in the group of transportation plates 3 is, for example, equal to or larger than 20, equal to or larger than 50, or equal to or larger than 80. Herein, "N" is defined as the number of the transportation plates 3 included in the group of transportation plates 3. "N" is, for example, a natural number equal to or larger than 20.

In a case where "K" is defined as any natural number equal to or larger than 1 and equal to or smaller than "N-1", the (K+1)-th transportation plate is disposed to be adjacent to the K-th transportation plate. In addition, the first transportation plate 3-1 is disposed to be adjacent to the N-th transportation plate. In this manner, the group of transportation plates 3 is disposed in an annular shape as a whole. For example, the second transportation plate 3-2 is disposed to be adjacent to the first transportation plate 3-1, and is also disposed to be adjacent to the third transportation plate 3-3.

Each transportation plate 3 in the group of transportation plates 3 includes: a front end portion 3f; a rear end portion 3e; and a middle portion 3m, which connects the front end portion 3f with the rear end portion 3e. It is to be noted that in an example illustrated in FIG. 2, the front end portion 3f of each transportation plate 3 is a front end portion in the moving direction (in other words, an end portion in the second direction DR2), and the rear end portion 3e of each transportation plate 3 is a rear end portion in the moving direction (in other words, an end portion opposite to the second direction DR2).

In the example illustrated in FIG. 2, the front end portion 3f of each transportation plate 3 is disposed to overlap the rear end portion 3e of another transportation plate 3, which is disposed to be adjacent in a plan view (in other words, when viewed in a direction along the fourth direction DR4), and the rear end portion 3e of each transportation plate 3 is disposed to overlap the front end portion 3f of further another transportation plate disposed to be adjacent in the plan view (in other words, when viewed in the direction along the fourth direction DR4).

For example, the first front end portion 3f-1 of the first transportation plate 3-1 is disposed to overlap a rear end portion 3e-N of another transportation plate 3-N in the plan view (in other words, when viewed in the direction along the fourth direction DR4). More specifically, the rear end portion 3e-N of such another transportation plate 3-N is covered with the first front end portion 3f-1 of the first transportation plate 3-1.

For example, the first rear end portion 3e-1 of the first transportation plate 3-1 is disposed to overlap a second front end portion 3f-2 of the second transportation plate 3-2 in the plan view (in other words, when viewed in the direction along the fourth direction DR4). More specifically, the first rear end portion 3e-1 of the first transportation plate 3-1 is covered with the second front end portion 3f-2 of the second transportation plate 3-2.

For example, the second rear end portion 3e-2 of the second transportation plate 3-2 is disposed to overlap a third front end portion 3f-3 of the third transportation plate 3-3 in the plan view. More specifically, the second rear end portion 3e-2 of the second transportation plate 3-2 is covered with the third front end portion 3f-3 of the third transportation plate 3-3.

As illustrated in FIG. 7, each transportation plate 3 in the group of transportation plates 3 includes a left end portion 3a and a right end portion 3b. In an example illustrated in FIG. 7, the left end portion 3a of each transportation plate 3 is an end portion on the left, when the transportation surface 3u of the transportation plate 3 is viewed in a direction from the rear end portion 3e toward the front end portion 3f, and the right end portion 3b of each transportation plate 3 is an end portion on the right, when the transportation surface 3u of the transportation plate 3 is viewed in the direction from the rear end portion 3e toward the front end portion 3f.

The first transportation plate 3-1 includes: the first front end portion 3f-1; the first rear end portion 3e-1; a first middle portion 3m-1, which connects the first front end portion 3f-1 with the first rear end portion 3e-1; a left end portion 3a-1; and a right end portion 3b-1.

The second transportation plate 3-2 includes: the second front end portion 3f-2; the second rear end portion 3e-2; the second middle portion 3m-2, which connects the second front end portion 3f-2 with the second rear end portion 3e-2; a left end portion 3a-2; and a right end portion 3b-2.

The third transportation plate 3-3 includes: the third front end portion 3f-3; a third rear end portion 3e-3; a third middle portion 3m-3, which connects the third front end portion 3f-3 with the third rear end portion 3e-3; a left end portion 3a-3; and a right end portion 3b-3.

The length (more specifically, the length in the direction along the first direction DR1) of each transportation plate 3 in the group of transportation plates 3 is, for example, equal to or longer than one meter and equal to or shorter than three meters. A length L1 of the first transportation plate 3-1 is, for example, equal to or longer than one meter and equal to or shorter than three meters, and the length of the second transportation plate 3-2 is, for example, equal to or longer than one meter and equal to or shorter than three meters.

The width of each transportation plate 3 in the group of transportation plates 3 (more specifically, the width of each transportation plate 3 in the group of transportation plates 3 in a direction along the second direction DR2) is, for example, equal to or larger than 40 millimeters and equal to or smaller than 200 millimeters. A width W1 of the first transportation plate 3-1 is, for example, equal to or larger than 40 millimeters and equal to or smaller than 200 millimeters, and a width W2 of the second transportation plate 3-2 is, for example, equal to or larger than 40 millimeters and equal to or smaller than 200 millimeters.

The plate thickness of each transportation plate 3 in the group of transportation plates 3 is, for example, equal to or smaller than five millimeters or equal to or smaller than three millimeters. In the example illustrated in FIG. 7, the plate thickness of the first front end portion 3f-1 of the first transportation plate 3-1 is substantially constant, and the plate thickness of the first rear end portion 3e-1 of the first transportation plate 3-1 is substantially constant. In addition, the plate thickness of the first middle portion 3m-1 of the first transportation plate 3-1 is substantially constant. In the example illustrated in FIG. 7, the plate thickness of the first transportation plate 3-1 is substantially constant as a whole.

Each transportation plate 3 in the group of transportation plates 3 is made of metal. Each transportation plate 3 in the group of transportation plates 3 is made of, for example, steel, more specifically, a hot-rolled soft steel plate, a cold-rolled steel plate, or a cold-rolled stainless steel plate.

The left end portion 3a of each transportation plate 3 in the group of transportation plates 3 is attached to the first endless component 21 (more specifically, the first endless chain 21a). In addition, the right end portion 3b of each transportation plate 3 in the group of transportation plates 3 is attached to the second endless component 22 (more specifically, the second endless chain 22a).

In the example illustrated in FIG. 7, a hole portion h1 into which a bolt is insertable is formed in the left end portion 3a-1 of the first transportation plate 3-1, and a hole portion h2 into which a bolt is insertable is formed in the right end portion 3b-1 of the first transportation plate 3-1. In an example illustrated in FIG. 8, the left end portion 3a-1 of the first transportation plate 3-1 is attached to the first endless chain 21a via a bolt BT, and the right end portion 3b-1 of the first transportation plate 3-1 is attached to the second endless chain 22a via a bolt BT. As can be understood from FIG. 2, the first transportation plate 3-1 is not coupled to another adjacent transportation plate. Therefore, when the first transportation plate 3-1 is damaged, the first transportation plate 3-1 can be easily replaced with a new first transportation plate.

In an example illustrated in FIG. 9, the first transportation plate 3-1 has the first transportation surface 3u-1 and the first back surface 3n-1.

The first transportation surface 3u-1 supports the dross directly or indirectly via the first laser beam reflection layer or another layer, when the first transportation plate 3-1 transports the dross. The first transportation surface 3u-1 of the first transportation plate 3-1 faces substantially upward when the first transportation plate 3-1 transports the dross. The first back surface 3n-1 is a surface disposed at the opposite end of the first transportation surface 3u-1 in the first transportation plate 3-1. The first back surface 3n-1 of the first transportation plate 3-1 is a surface located below the first transportation surface 3u-1 when the first transportation plate 3-1 transports the dross. The first back surface 3n-1 faces substantially downward when the first transportation plate 3-1 transports the dross.

In an example illustrated in FIG. 9, the second transportation plate 3-2 includes the second transportation surface 3u-2 and the second back surface 3n-2.

The second transportation surface 3u-2 supports the dross directly or indirectly via the second laser beam reflection layer or another layer, when the second transportation plate 3-2 transports the dross. The second transportation surface 3u-2 of the second transportation plate 3 -2 faces substantially upward when the second transportation plate 3-2 transports the dross. The second back surface 3n-2 is a surface disposed at the opposite end of the second transportation surface 3u-2 in the second transportation plate 3-2. The second back surface 3n-2 of the second transportation plate 3-2 is a surface located below the second transportation surface 3u-2 when the second transportation plate 3-2 transports the dross. The second back surface 3n-2 faces substantially downward when the second transportation plate 3-2 transports the dross.

In the example illustrated in FIG. 9, the front end portion 3f of each transportation plate 3 in the group of transportation plates 3 includes a convex-shaped curved portion CP, which extends in the first direction DR1.

For example, the first front end portion 3f-1 of the first transportation plate 3-1 includes a convex-shaped curved portion CP1, which extends in the first direction DR1. The first front end portion 3f-1 of the first transportation plate 3-1 also includes a convex-shaped transportation surface SU1, which extends in the first direction DR1. The convex-shaped transportation surface SU1 is a surface of the convex-shaped curved portion CP1 at one end in the third direction DR3. In an example illustrated in FIG. 10, the convex-shaped transportation surface SU1 is a curved surface that is convex in the third direction DR3, and constitutes a part of the first transportation surface 3u-1 of the first transportation plate 3-1.

For example, the second front end portion 3f -2 of the second transportation plate 3-2 includes a convex-shaped curved portion CP2, which extends in the first direction DR1. The second front end portion 3f-2 of the second transportation plate 3-2 also has a convex-shaped transportation surface SU2, which extends in the first direction DR1. The convex-shaped transportation surface SU2 is a surface of the convex-shaped curved portion CP2 at one end in the third direction DR3. In an example illustrated in FIG. 10, the convex-shaped transportation surface SU2 is a curved surface that is convex in the third direction DR3, and constitutes a part of the second transportation surface 3u-2 of the second transportation plate 3-2.

It is to be noted that in the first embodiment, the shape of the front end portion 3f of each transportation plate 3 in the group of transportation plates 3 is not limited to the example illustrated in FIG. 10.

In the example illustrated in FIG. 9, the rear end portion 3e of each transportation plate 3 in the group of transportation plates 3 includes an upright portion TP, which protrudes in the third direction DR3.

For example, the first rear end portion 3e-1 of the first transportation plate 3-1 includes a first upright portion TP1, which extends in the first direction DR1, and which protrudes in the third direction DR3. In an example illustrated in FIG. 11, the first upright portion TP1 scrapes out the dross D under the convex-shaped curved portion CP2 of the second transportation plate 3-2, when the first transportation plate 3-1 turns around.

For example, the second rear end portion 3e-2 of the second transportation plate 3-2 includes a second upright portion TP2, which extends in the first direction DR1, and which protrudes in the third direction DR3. In the example illustrated in FIG. 11, the second upright portion TP2 scrapes out the dross under the convex-shaped curved portion CP3 of the third transportation plate 3-3, when the second transportation plate 3-2 turns around.

It is to be noted that in the first embodiment, the shape of the rear end portion 3e of each transportation plate 3 in the group of transportation plates 3 is not limited to the example illustrated in FIG. 11. For example, the shape of the rear end portion 3e of each transportation plate 3 in the group of transportation plates 3 may have a substantially arc shape or a substantially circular shape when viewed in the direction along the first direction DR1.

In the example illustrated in FIG. 9, the middle portion 3m of each transportation plate 3 in the group of transportation plates 3 connects the front end portion 3f with the rear end portion 3e.

For example, the first middle portion 3m-1 of the first transportation plate 3-1 connects the first front end portion 3f-1 of the first transportation plate 3-1 with the first rear end portion 3e-1 of the first transportation plate 3-1. In the example illustrated in FIG. 10, a front end of the first middle portion 3m-1 is connected with the first front end portion 3f-1 (more specifically, the convex-shaped curved portion CP1) through a first bent portion BA1, which extends in the first direction DR1. In addition, a rear end of the first middle portion 3m-1 is connected with the first rear end portion 3e-1 (more specifically, the first upright portion TP1) through the second bent portion BB1, which extends in the first direction DR1. In the example illustrated in FIG. 10, the first middle portion 3m-1 includes a first flat portion FP1. The first middle portion 3m-1 also includes a flat transportation surface SF1, which extends in the first direction DR1. The flat transportation surface SF1 is a surface of the first flat portion FP1 at one end in the third direction DR3. The flat transportation surface SF1 constitutes a part of the first transportation surface 3u-1 of the first transportation plate 3-1.

For example, the second middle portion 3m-2 of the second transportation plate 3-2 connects the second front end portion 3f-2 of the second transportation plate 3-2 with the second rear end portion 3e-2 of the second transportation plate 3-2. In the example illustrated in FIG. 10, a front end of the second middle portion 3m-2 is connected with the second front end portion 3f-2 (more specifically, the convex-shaped curved portion CP2) through a third bent portion BA2, which extends in the first direction DR1. In addition, a rear end of the second middle portion 3m-2 is connected with the second rear end portion 3e-2 (more specifically, the second upright portion TP2) through a fourth bent portion BB2, which extends in the first direction DR1. In the example illustrated in FIG. 10, the second middle portion 3m-2 includes a second flat portion FP2. The second middle portion 3m-2 also includes a flat transportation surface SF2, which extends in the first direction DR1. The flat transportation surface SF2 is a surface of the second flat portion FP2 at one end in the third direction DR3. The flat transportation surface SF2 constitutes a part of the second transportation surface 3u-2 of the second transportation plate 3-2.

It is to be noted that in the first embodiment, the shape of the middle portion 3m of each transportation plate 3 in the group of transportation plates 3 is not limited to the example illustrated in FIG. 10. For example, at least a part of the middle portion 3m of each transportation plate 3 in the group of transportation plates 3 may have a substantially arc shape, a substantially letter V shape, or a substantially letter U shape when viewed in the direction along the first direction DR1.

Hereinafter, some examples of the temperature rise prevention surface will be described, but the temperature rise prevention surface is not limited to the examples to be described below. In addition, hereinafter, the first temperature rise prevention surface 4-1, which prevents a temperature rise of the first transportation plate 3-1, and the second temperature rise prevention surface 4-2, which prevents a temperature rise of the second transportation plate 3-2, will be representatively described, and the descriptions of the other temperature rise prevention surfaces that prevent the temperature rises of the other transportation plates will be omitted.

### (First Example of Temperature Rise Prevention Surface)

In an example illustrated in FIG. 12, the first temperature rise prevention surface 4-1 includes a surface of the first laser beam reflection layer 4r-1, which covers at least a part of the first transportation surface 3u-1 of the first transportation plates 3-1. In other words, at least a part of the first transportation surface 3u-1 of the first transportation plate 3-1 is covered with the first laser beam reflection layer 4r-1.

The first laser beam reflection layer 4r-1, which covers at least a part of the first transportation plate 3-1, is made of a material having a high laser reflectivity (for example, copper, silver, or aluminum). The first transportation plate 3-1 is made of, for example, steel, more specifically, a hot-rolled soft steel plate, a cold-rolled steel plate, or a cold-rolled stainless steel plate.

The laser reflectivity of the first laser beam reflection layer 4r-1 is higher than the laser reflectivity of the first transportation plate 3-1. It is to be noted that in the first embodiment (or a second embodiment to be described later), the wavelength of the laser beam LB emitted from the laser beam irradiator 60 is, for example, equal to or longer than 1060 nanometers and equal to or shorter than 1080 nanometers. The laser reflectivity of the first laser beam reflection layer 4r-1 with respect to the laser beam having a wavelength equal to or longer than 1060 nanometers and equal to or shorter than 1080 nanometers is, for example, equal to or larger than 70%, equal to or larger than 80%, or equal to or larger than 90%.

In the example illustrated in FIG. 12, the first laser beam reflection layer 4r-1 covers a part of the first transportation surface 3u-1 of the first transportation plate 3-1 (for example, the transportation surface of the first middle portion 3m-1). In addition, another part of the first transportation surface 3u-1 of the first transportation plate 3-1 (for example, the transportation surface of the first front end portion 3f-1) is exposed without being covered with the first laser beam reflection layer 4r-1.

In an example illustrated in FIG. 13, at least a part of the transportation surface (more specifically, the flat transportation surface SF1) of the first middle portion 3m-1 is covered with the first laser beam reflection layer 4r-1. Therefore, the thermal deformation of the first middle portion 3m-1, which is relatively easily deformed, is prevented by the first laser beam reflection layer 4r-1. More specifically, the laser beam LB, which travels toward the first middle portion 3m-1, is reflected by the first laser beam reflection layer 4r-1, and thus the heat input into the first middle portion 3m-1 is prevented. It is to be noted that in FIG. 13, in order to facilitate understanding of the laser beam reflection layers (4r-1, 4r-2), the laser beam reflection layers (4r-1, 4r-2) are hatched with dots.

In the example illustrated in FIG. 13, the entirety of the transportation surface (more specifically, the convex-shaped transportation surface SU1) of the first front end portion 3f-1 of the first transportation plate 3-1 is exposed without being covered with the first laser beam reflection layer 4r-1. Also, in the example illustrated in FIG. 13, the entirety of the first rear end portion 3e-1 (more specifically, the first upright portion TP1) is exposed without being covered with the first laser beam reflection layer 4r-1. In this case, the area in which the first laser beam reflection layer 4r-1 is disposed is reduced, and the material cost is reduced.

Alternatively, as illustrated in FIG. 14, substantially the entirety of the first transportation surface 3u-1 of the first transportation plate 3-1 may be covered with the first laser beam reflection layer 4r-1. It is to be noted that in the example illustrated in FIG. 13, neither the left end portion 3a-1 of the first transportation plate 3-1 nor the right end portion 3b-1 of the first transportation plate 3-1 is irradiated with the laser beam, and thus neither the left end portion 3a-1 nor the right end portion 3b-1 is covered with the first laser beam reflection layer 4r-1. It is needless to say that the left end portion 3a-1 and the right end portion 3b-1 may be covered with the first laser beam reflection layer 4r-1.

In the example illustrated in FIG. 12 or FIG. 14, the first laser beam reflection layer 4r-1, which covers at least a part of the first transportation surface 3u-1 (for example, a copper layer or an aluminum layer that covers at least a part of the first transportation surface 3u-1), effectively reflects the laser beam LB emitted from the laser beam irradiator 60. In this manner, the heat input into the first transportation plate 3-1 is prevented, and the temperature rise of the first transportation plate 3-1 is prevented. The thermal deformation and deflection of the first transportation plate 3-1 are also prevented.

The first laser beam reflection layer 4r-1 includes, for example, a plating layer such as a copper plating layer, a silver plating layer, or an aluminum plating layer. The first laser beam reflection layer 4r-1 may be a plating layer formed on the first transportation plate 3-1 in a wet film forming method, or may be a plating layer formed on the first transportation plate 3-1 in a dry film forming method (it is to be noted that the dry film forming method includes a vapor deposition method). Alternatively, the first laser beam reflection layer 4r-1 may include a laser beam reflection plate (for example, a copper plate, a copper alloy plate, an aluminum plate, or an aluminum alloy plate) attached to the first transportation plate 3-1.

In the example illustrated in FIG. 12, the second temperature rise prevention surface 4-2 includes a surface of the second laser beam reflection layer 4r-2, which covers at least a part of the second transportation surface 3u-2 of the second transportation plate 3-2. In other words, at least a part of the second transportation surface 3u-2 of the second transportation plate 3-2 is covered with the second laser beam reflection layer 4r-2.

The second laser beam reflection layer 4r-2, which covers at least a part of the second transportation plate 3-2, is made of a material having a high laser reflectivity (for example, copper, silver, or aluminum). The second transportation plate 3-2 is made of, for example, steel, more specifically, a hot-rolled soft steel plate, a cold-rolled steel plate, or a cold-rolled stainless steel plate.

The laser reflectivity of the second laser beam reflection layer 4r-2 is higher than the laser reflectivity of the second transportation plate 3-2. The laser reflectivity of the second laser beam reflection layer 4r-2 with respect to the laser beam having a wavelength of equal to or longer than 1060 nanometers and equal to or shorter than 1080 nanometers is, for example, equal to or larger than 70%, equal to or larger than 80%, or equal to or larger than 90%.

In the example illustrated in FIG. 12, the second laser beam reflection layer 4r-2 covers a part of the second transportation surface 3u-2 of the second transportation plate 3-2 (for example, the transportation surface of the second middle portion 3m-2). Another part of the second transportation surface 3u-2 of the second transportation plate 3-2 (for example, the transportation surface of the second front end portion 3f-2) is exposed without being covered with the second laser beam reflection layer 4r-2.

In the example illustrated in FIG. 13, at least a part of the transportation surface (more specifically, the flat transportation surface SF2) of the second middle portion 3m-2 is covered with the second laser beam reflection layer 4r-2. Therefore, the thermal deformation of the second middle portion 3m-2, which is relatively easily deformed, is prevented by the second laser beam reflection layer 4r-2.

In the example illustrated in FIG. 13, the entirety of the transportation surface (more specifically, the convex-shaped transportation surface SU2) of the second front end portion 3f-2 of the second transportation plate 3-2 is exposed without being covered with the second laser beam reflection layer 4r-2. Also, in the example illustrated in FIG. 13, the entirety of the second rear end portion 3e-2 (more specifically, the second upright portion TP2) is exposed without being covered with the second laser beam reflection layer 4r-2. In this case, the area in which the second laser beam reflection layer 4r-2 is disposed is reduced, and the material cost is reduced.

Alternatively, as illustrated in FIG. 14, substantially the entirety of the second transportation surface 3u-2 of the second transportation plate 3-2 may be covered with the second laser beam reflection layer 4r-2. It is to be noted that in the example illustrated in FIG. 13, neither the left end portion 3a-2 of the second transportation plate 3-2 nor the right end portion 3b-2 of the second transportation plate 3-2 is irradiated with the laser beam, and thus neither the left end portion 3a-2 nor the right end portion 3b-2 is covered with the second laser beam reflection layer 4r-2. It is needless to say that the left end portion 3a-2 and the right end portion 3b-2 may be covered with the second laser beam reflection layer 4r-2.

In the example illustrated in FIG. 12 or FIG. 14, the second laser beam reflection layer 4r-2, which covers at least a part of the second transportation surface 3u-2, effectively reflects the laser beam LB emitted from the laser beam irradiator 60. In this manner, the heat input into the second transportation plate 3-2 is prevented, and the temperature rise of the second transportation plate 3-2 is prevented. The thermal deformation and deflection of the second transportation plate 3-2 are also prevented.

The second laser beam reflection layer 4r-2 includes, for example, a plating layer such as a copper plating layer, a silver plating layer, or an aluminum plating layer. Alternatively, the second laser beam reflection layer 4r-2 may include a laser beam reflection plate (for example, a copper plate, a copper alloy plate, an aluminum plate, or an aluminum alloy plate) attached to the second transportation plate 3-2.

### (Second Example of Temperature Rise Prevention Surface)

In an example illustrated in FIG. 15, the first temperature rise prevention surface 4-1 includes a surface of a first heat conduction layer 4c-1, which covers at least a part of the first back surface 3n-1 of the first transportation plate 3-1 (that is, the surface at the opposite end of the first transportation surface 3u-1 in the first transportation plate 3-1). In other words, at least a part of the first back surface 4n-1 of the first transportation plate 3-1 is covered with the first heat conduction layer 4c-1.

The heat conductivity of the first heat conduction layer 4c-1 is higher than the heat conductivity of the first transportation plate 3-1. The first heat conduction layer 4c-1 is made of a material having a high heat conductivity (for example, copper, silver, or aluminum). The first transportation plate 3-1 is made of, for example, steel, more specifically, a hot-rolled soft steel plate, a cold-rolled steel plate, or a cold-rolled stainless steel plate. The heat conductivity of the first heat conduction layer 4c-1 is, for example, equal to or higher than 150 W/m•K, equal to or higher than 200 W/m•K, or equal to or higher than 300 W/m•K.

In the example illustrated in FIG. 15, the first heat conduction layer 4c-1 covers a part of the first back surface 3n-1 of the first transportation plate 3-1 (for example, the back surface of the first middle portion 3m-1). In addition, another part of the first back surface 3n-1 of the first transportation plate 3-1 (for example, the back surface of the first front end portion 3f-1) is exposed without being covered with the first heat conduction layer 4c-1.

In an example illustrated in FIG. 16, at least a part of the back surface (more specifically, a flat back surface SN1) of the first middle portion 3m-1 is covered with the first heat conduction layer 4c-1. Therefore, the heat of the first middle portion 3m-1 is effectively diffused by the first heat conduction layer 4c-1. For example, it is assumed that the temperature of the first middle portion 3m-1 rises due to the laser beam LB being incident on the first middle portion 3m-1. In this case, the heat is promptly diffused from a region, which has been irradiated with the laser beam LB, in the first middle portion 3m-1 to another region via the first heat conduction layer 4c-1. It is to be noted that in FIG. 16, the heat conduction layers (4c-1, 4c-2) are hatched with dots in order to facilitate understanding of the heat conduction layers (4c-1, 4c-2).

In the example illustrated in FIG. 16, the entirety of the back surface (more specifically, a concave-shaped back surface SD1) of the first front end portion 3f-1 of the first transportation plate 3-1 is exposed without being covered with the first heat conduction layer 4c-1. Also, in the example illustrated in FIG. 16, the entirety of the first rear end portion 3e-1 (more specifically, the first upright portion TP1) is exposed without being covered with the first heat conduction layer 4c-1. In this case, the area in which the first heat conduction layer 4c-1 is disposed is reduced, and the material cost is reduced.

Alternatively, as illustrated in FIG. 17, substantially the entirety of the first back surface 3n-1 of the first transportation plate 3-1 may be covered with the first heat conduction layer 4c-1. It is to be noted that in the example illustrated in FIG. 16, neither the left end portion 3a-1 of the first transportation plate 3-1 nor the right end portion 3b-1 of the first transportation plate 3-1 is irradiated with the laser beam, and thus neither the left end portion 3a-1 nor the right end portion 3b-1 is covered with the first heat conduction layer 4c-1. It is needless to say that the left end portion 3a-1 and the right end portion 3b-1 may be covered with the first heat conduction layer 4c-1.

In the example illustrated in FIG. 15 or FIG. 17, the first heat conduction layer 4c-1 (for example, a copper layer, a silver layer, or an aluminum layer that covers at least a part of the first back surface 3n-1 of the first transportation plate 3-1), which covers at least a part of the first back surface 3n-1 of the first transportation plate 3-1, promptly diffuses the heat from the region, which has been irradiated with the laser beam LB, in the first transportation plate 3-1 to another region in the first transportation plate 3-1. In this manner, a local temperature rise in the first transportation plate 3-1 is prevented, and the thermoplastic deformation of the first transportation plate 3-1 is prevented. In addition, the surface of the first heat conduction layer 4c-1 promptly dissipates the heat of the first transportation plates 3-1 into the air around the first transportation plates 3-1. In the example illustrated in FIG. 15 or FIG. 17, the temperature rise of the first transportation plate 3-1 is prevented by the heat conduction in the first heat conduction layer 4c-1 and the heat dissipation from the surface of the first heat conduction layer 4c-1, and the thermal deformation and deflection of the first transportation plate 3-1 are prevented.

The first heat conduction layer 4c-1 includes, for example, a plating layer such as a copper plating layer, a silver plating layer, or an aluminum plating layer. The first heat conduction layer 4c-1 may be a plating layer formed on the first transportation plate 3-1 in the wet film forming method, or may be a plating layer formed on the first transportation plate 3-1 in the dry film forming method. Alternatively, the first heat conduction layer 4c-1 may include a heat conduction plate (for example, a copper plate, a copper alloy plate, an aluminum plate, or an aluminum alloy plate) attached to the first transportation plate 3-1, or may include a heat dissipation sheet (for example, a graphite sheet, a resin-made heat dissipation sheet, or a fluorine-based rubber-made heat dissipation sheet) attached to the first transportation plate 3-1. The first heat conduction layer 4c-1 may also include a layer made of a coating material for heat dissipation.

In the example illustrated in FIG. 15, the second temperature rise prevention surface 4-2 includes a surface of the second heat conduction layer 4c-2, which covers at least a part of the second back surface 3n-2 of the second transportation plate 3-2 (that is, a surface at the opposite end of the second transportation surface 3u-2 in the second transportation plate 3-2). In other words, at least a part of the second back surface 4n-2 of the second transportation plate 3-2 is covered with the second heat conduction layer 4c-2.

The heat conductivity of the second heat conduction layer 4c-2 is higher than the heat conductivity of the second transportation plate 3-2. The second heat conduction layer 4c-2 is made of a material having a high heat conductivity (for example, copper, silver, or aluminum). The second transportation plate 3-2 is made of, for example, steel, more specifically, a hot-rolled soft steel plate, a cold-rolled steel plate, or a cold-rolled stainless steel plate. The heat conductivity of the second heat conduction layer 4c-2 is, for example, equal to or higher than 150 W/m•K, equal to or higher than 200 W/m•K, or equal to or higher than 300 W/m•K.

In an example illustrated in FIG. 15, the second heat conduction layer 4c-2 covers a part of the second back surface 3n-2 of the second transportation plate 3-2 (for example, the back surface of the second middle portion 3m-2). In addition, another part of the second back surface 3n-2 of the second transportation plate 3-2 (for example, the back surface of the second front end portion 3f-2) is exposed without being covered with the second heat conduction layer 4c-2.

In an example illustrated in FIG. 16, at least a part of the back surface (more specifically, a flat transportation surface SN2) of the second middle portion 3m-2 is covered with the second heat conduction layer 4c-2. Therefore, the heat of the second middle portion 3m-2 is effectively diffused by the second heat conduction layer 4c-2.

In the example illustrated in FIG. 16, the entirety of the back surface (more specifically, a concave-shaped back surface SD2) of the second front end portion 3f-2 of the second transportation plate 3-2 is exposed without being covered with the second heat conduction layer 4c-2. Also, in the example illustrated in FIG. 16, the entirety of the second rear end portion 3e-2 (more specifically, the second upright portion TP2) is exposed without being covered with the second heat conduction layer 4c-2. In this case, the area in which the second heat conduction layer 4c-2 is disposed is reduced, and the material cost is reduced.

Alternatively, as illustrated in FIG. 17, substantially the entirety of the second back surface 3n-2 of the second transportation plate 3-2 may be covered with the second heat conduction layer 4c-2.

In the example illustrated in FIG. 15 or FIG. 17, the second heat conduction layer 4c-2, which covers at least a part of the second back surface 3n-2 of the second transportation plate 3-2, promptly diffuses the heat from the region, which has been irradiated with the laser beam LB, in the second transportation plate 3-2 to another region in the second transportation plate 3-2. In this manner, a local temperature rise in the second transportation plate 3-2 is prevented, and the thermoplastic deformation of the second transportation plate 3-2 is prevented. In addition, the surface of the second heat conduction layer 4c-2 promptly dissipates the heat of the second transportation plates 3-2 into the air around the second transportation plates 3-2. In the example illustrated in FIG. 15 or FIG. 17, the temperature rise of the second transportation plate 3-2 is prevented by the heat conduction in the second heat conduction layer 4c-2 and the heat dissipation from the surface of the first heat conduction layer 4c-2, and the thermal deformation and deflection of the second transportation plate 3-2 are prevented.

The second heat conduction layer 4c-2 includes, for example, a plating layer such as a copper plating layer, a silver plating layer, or an aluminum plating layer. Alternatively, the second heat conduction layer 4c-2 may include a heat conduction plate (for example, a copper plate, a copper alloy plate, an aluminum plate, or an aluminum alloy plate) attached to the second transportation plate 3-2, or may include a heat dissipation sheet (for example, a graphite sheet, a resin-made heat dissipation sheet, or a fluorine-based rubber-made heat dissipation sheet) attached to the second transportation plate 3-2. The second heat conduction layer 4c-2 may also include a layer made of a coating material for heat dissipation.

### (Third Example of Temperature Rise Prevention Surface)

A third example of the temperature rise prevention surface is a combination of the first example of the temperature rise prevention surface and the second example of the temperature rise prevention surface. In other words, at least a part of the first transportation surface 3u-1 of the first transportation plate 3-1 is covered with the first laser beam reflection layer 4r-1, and at least a part of the first back surface 3n-1 of the first transportation plate 3-1 is covered with the first heat conduction layer 4c-1. In addition, at least a part of the second transportation surface 3u-2 of the second transportation plate 3-2 is covered with the second laser beam reflection layer 4r-2, and at least a part of the second back surface 3n-2 of the second transportation plate 3-2 is covered with the second heat conduction layer 4c-2.

More specifically, as illustrated in FIG. 18, the first temperature rise prevention surface 4-1 includes: a surface of the first laser beam reflection layer 4r-1, which covers at least a part of the first transportation surface 3u-1 of the first transportation plate 3-1; and a surface of the first heat conduction layer 4c-1, which covers at least a part of the first back surface 3n-1 of the first transportation plate 3-1. In addition, the second temperature rise prevention surface 4-2 includes: a surface of the second laser beam reflection layer 4r-2, which covers at least a part of the second transportation surface 3u-2 of the second transportation plate 3-2; and a surface of the second heat conduction layer 4c-2, which covers at least a part of the second back surface 3n-2 of the second transportation plate 3-2.

In the third example of the temperature rise prevention surface, all of the matters that have been described in the first example of the temperature rise prevention surface can be adopted as each configuration of the first laser beam reflection layer 4r-1 and the second laser beam reflection layer 4r-2. Also, in the third example of the temperature rise prevention surface, all of the matters that have been described in the second example of the temperature rise prevention surface can be adopted as each configuration of the first heat conduction layer 4c-1 and the second heat conduction layer 4c-2.

In the first example of the temperature rise prevention surface, the second example of the temperature rise prevention surface, or the third example of the temperature rise prevention surface, the main material of the first transportation plate 3-1 is, for example, steel. The main material of the second transportation plate 3-2 is also, for example, steel. It is to be noted that herein, the main material of the first transportation plate 3-1 means a material having the largest weight ratio to the total weight of the first transportation plate 3-1. Also herein, the main material of the second transportation plate 3-2 means a material having the largest weight ratio to the total weight of the second transportation plate 3-2.

In the first example of the temperature rise prevention surface, the second example of the temperature rise prevention surface, or the third example of the temperature rise prevention surface, the first temperature rise prevention surface 4-1 is made of, for example, copper, silver, or aluminum. More specifically, the first temperature rise prevention surface 4-1 is made of copper, a copper alloy, aluminum, or an aluminum alloy. In addition, the second temperature rise prevention surface 4-2 is made of, for example, copper, silver, or aluminum. More specifically, the second temperature rise prevention surface 4-2 is made of copper, a copper alloy, aluminum, or an aluminum alloy.

In a case where the main material of the first transportation plate 3-1 is steel and the first temperature rise prevention surface 4-1 is made of copper, silver, or aluminum, it is possible to satisfy all of the strength requirement, the formability requirement, the manufacturing cost requirement, and the temperature rise prevention requirement of the first transportation plate 3-1.

In a case where the main material of the second transportation plate 3-2 is steel and the second temperature rise prevention surface 4-2 is made of copper, silver, or aluminum, it is possible to satisfy all of the strength requirement, the formability requirement, the manufacturing cost requirement, and the temperature rise prevention requirement of the second transportation plate 3-2.

### (Fourth Example of Temperature Rise Prevention Surface)

In an example illustrated in FIG. 19, the first temperature rise prevention surface 4-1 includes a surface of a first heat dissipation component 5-1, which is disposed in contact with at least a part of the first back surface 3n-1 of the first transportation plate 3-1.

In the example illustrated in FIG. 19, the dross transportation conveyor 2A includes the first heat dissipation component 5-1, which is supported by the first transportation plate 3-1. The first transportation plate 3-1 has a contact surface 31t in contact with the first heat dissipation component 5-1. In addition, the contact surface 31t includes at least a part of the first back surface 3n-1 of the first transportation plate 3-1.

The first heat dissipation component 5-1 is attached to the first transportation plate 3-1. The first heat dissipation component 5-1 may be attached to the first transportation plate 3-1 by welding, or may be attached to the first transportation plate 3-1 via an attachment member such as a bolt or an adhesive sheet.

In the example illustrated in FIG. 19, the first heat dissipation component 5-1 includes a first heat sink 50-1. The first heat sink 50-1 may include a first base portion 51-1, and a plurality of first heat dissipation pieces 52-1 (for example, a plurality of heat dissipation pins 52p to be described later or a plurality of heat dissipation fins 52f to be described later), which are disposed on the first base portion 51-1. The first heat dissipation component 5-1 may include, in addition to the first heat sink 50-1, a heat dissipation sheet (more specifically, a heat conductive sheet having a high heat conductivity) disposed between the first heat sink 50-1 and the first transportation plate 3-1. The first heat sink 50-1 is made of, for example, aluminum, copper, or ceramics.

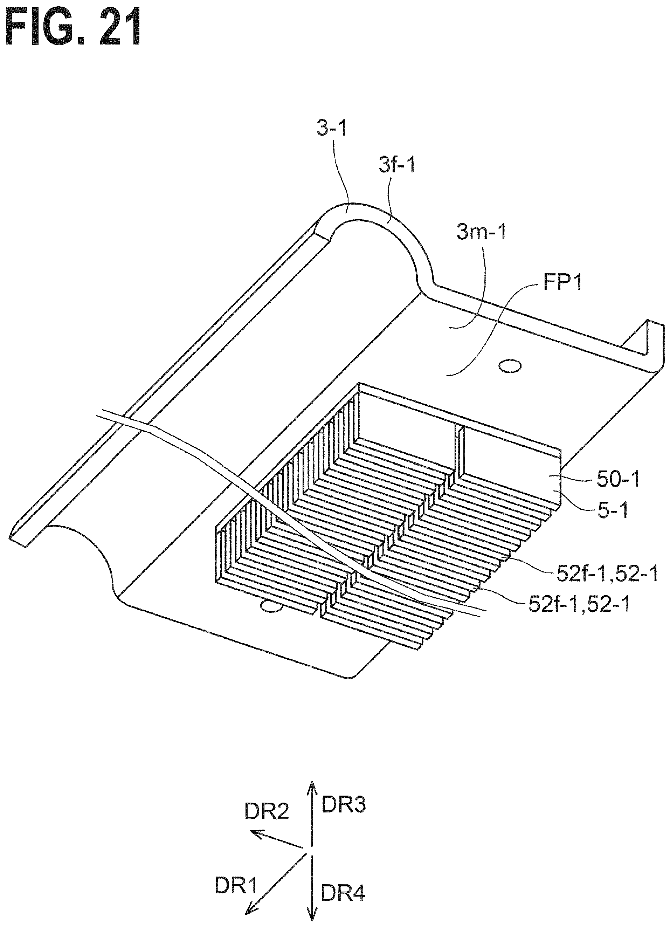

In an example illustrated in FIG. 20, the first heat dissipation component 5-1 includes a plurality of heat dissipation protrusions (more specifically, a plurality of heat dissipation pins 52p-1). The plurality of heat dissipation protrusions (more specifically, the plurality of heat dissipation pins 52p-1) each protrude, for example, in the fourth direction DR4. Alternatively, as illustrated in FIG. 21, the first heat dissipation component 5-1 may include a plurality of heat dissipation fins 52f-1. The plurality of heat dissipation fins 52f-1 each protrude, for example, in the fourth direction DR4.

In the example illustrated in FIG. 20 or FIG. 21, the first heat dissipation component 5-1 is disposed in contact with at least a part of the first middle portion 3m-1 (more specifically, the first flat portion FP1) of the first transportation plate 3-1.

In the example illustrated in FIG. 19, the first heat dissipation component 5-1 receives the heat from the first transportation plate 3-1, and dissipates the received heat into the air around the first heat dissipation component 5-1. In this manner, the temperature rise of the first transportation plate 3-1 due to the laser beam irradiation is prevented by the surface (that is, the heat dissipation surface) of the first heat dissipation component 5-1, and the thermal deformation and deflection of the first transportation plate 3-1 are prevented.

In the example illustrated in FIG. 19, the second temperature rise prevention surface 4-2 includes a surface of a second heat dissipation component 5-2, which is disposed in contact with at least a part of the second back surface 3n-2 of the second transportation plate 3-2.

In the example illustrated in FIG. 19, the dross transportation conveyor 2A includes a second heat dissipation component 5-2, which is supported by the second transportation plate 3-2. The second transportation plate 3-2 has a contact surface 32t in contact with the second heat dissipation component 5-2. In addition, the contact surface 32t includes at least a part of the second back surface 3n-2 of the second transportation plate 3-2.

The second heat dissipation component 5-2 is attached to the second transportation plate 3-2. The second heat dissipation component 5-2 may be attached to the second transportation plate 3-2 by welding, or may be attached to the second transportation plate 3-2 via an attachment member such as a bolt or an adhesive sheet.

In the example illustrated in FIG. 19, the second heat dissipation component 5-2 includes a second heat sink 50-2. The second heat sink 50-2 may include a second base portion 51-2, and a plurality of second heat dissipation pieces 52-2 (for example, a plurality of heat dissipation pins or a plurality of heat dissipation fins) which are disposed on the second base portion 51-2. The second heat dissipation component 5-2 may include, in addition to the second heat sink 50-2, a heat dissipation sheet (more specifically, a heat conductive sheet having a high heat conductivity) disposed between the second heat sink 50-2 and the second transportation plate 3-2. The second heat sink 50-2 is made of, for example, aluminum, copper, or ceramics.

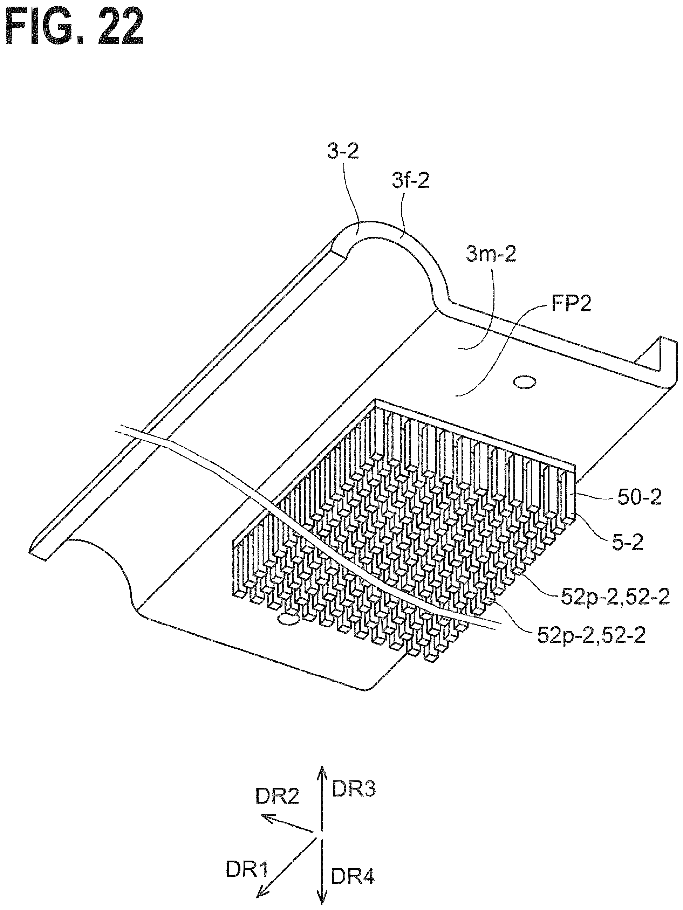

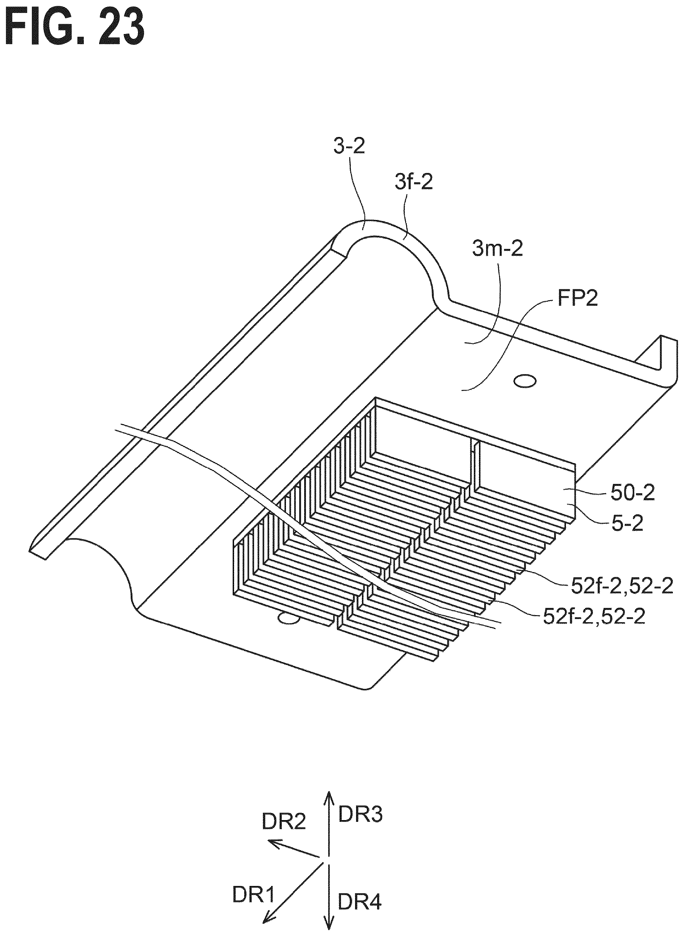

In an example illustrated in FIG. 22, the second heat dissipation component 5-2 includes a plurality of heat dissipation protrusions (more specifically, a plurality of heat dissipation pins 52p-2). The plurality of heat dissipation protrusions (more specifically, the plurality of heat dissipation pins 52p-2) each protrude, for example, in the fourth direction DR4. Alternatively, as illustrated in FIG. 23, the second heat dissipation component 5-2 may include a plurality of heat dissipation fins 52f. The plurality of heat dissipation fins 52f-2 each protrude, for example, in the fourth direction DR4.

In the example illustrated in FIG. 22 or FIG. 23, the second heat dissipation component 5-2 is disposed in contact with at least a part of the second middle portion 3m-2 (more specifically, the second flat portion FP2) of the second transportation plate 3-2.

In the example illustrated in FIG. 19, the second heat dissipation component 5-2 receives the heat from the second transportation plate 3-2, and dissipates the received heat into the air around the second heat dissipation component 5-2. In this manner, the temperature rise of the second transportation plate 3-2 due to the laser beam irradiation is prevented by the surface (that is, the heat dissipation surface) of the second heat dissipation component 5-2, and the thermal deformation and deflection of the second transportation plate 3-2 are prevented.

### (Fifth Example of Temperature Rise Prevention Surface)

In the first to fourth examples of the temperature rise prevention surface, the first temperature rise prevention surface 4-1 is provided in addition to the first transportation plate 3-1, and the second temperature rise prevention surface 4-2 is provided in addition to the second transportation plate 3-2. In the fifth example of the temperature rise prevention surface, the first transportation plate 3-1 itself has a temperature rise prevention surface that prevents the temperature rise of the first transportation plate 3-1, and the second transportation plate 3-2 itself has a temperature rise prevention surface that prevents the temperature rise of the second transportation plate 3-2.

In an example illustrated in FIG. 24, the main material of the first transportation plate 3-1 is copper or aluminum. More specifically, the first transportation plate 3-1 is made of copper, a copper alloy, aluminum, or an aluminum alloy.

In the example illustrated in FIG. 24, at least a part of the first transportation surface 3u-1 of the first transportation plate 3-1 is made of copper or aluminum. The entirety of the first transportation surface 3u-1 of the first transportation plate 3-1 may be made of copper or aluminum. In the example illustrated in FIG. 24, the copper surface or the aluminum surface that constitutes at least a part of the first transportation surface 3u-1 of the first transportation plate 3-1 serves as the temperature rise prevention surface having a high laser reflectivity. The copper surface or the aluminum surface effectively reflects the laser beam LB emitted from the laser beam irradiator 60.

In the example illustrated in FIG. 24, the main material of the second transportation plate 3-2 is copper or aluminum. More specifically, the second transportation plate 3-2 is made of copper, a copper alloy, aluminum, or an aluminum alloy.

In the example illustrated in FIG. 24, at least a part of the second transportation surface 3u-2 of the second transportation plate 3-2 is made of copper or aluminum. The entirety of the second transportation surface 3u-2 of the second transportation plate 3-2 may be made of copper or aluminum. In the example illustrated in FIG. 24, the copper surface or the aluminum surface that constitutes at least a part of the second transportation surface 3u-2 of the second transportation plate 3-2 serves as the temperature rise prevention surface having a high laser reflectivity. The copper surface or the aluminum surface effectively reflects the laser beam LB emitted from the laser beam irradiator 60.

In a case where the main material of the first transportation plate 3-1 is copper or aluminum, the laser reflectivity of the first transportation plate 3-1 is high, and the heat conductivity of the first transportation plate 3-1 is high. Therefore, the temperature rise of the first transportation plate 3-1 is prevented by the first transportation plate 3-1 itself.

In a case where the main material of the second transportation plate 3-2 is copper or aluminum, the laser reflectivity of the second transportation plate 3-2 is high, and the heat conductivity of the second transportation plate 3-2 is high. Therefore, the temperature rise of the second transportation plate 3-2 is prevented by the second transportation plate 3-2 itself.

### (Upward Inclination of Circling Orbit OB)

As illustrated in FIG. 25, the circling orbit OB of the group of transportation plates 3 may include an upward inclination CL having a height that increases from the machine region RG1 toward the discharge region RG2. In a case where the circling orbit OB includes the upward inclination CL, the container 13, which receives the dross D from the dross transportation conveyor 2A, or a second transportation conveyor 15, which receives the dross D from the dross transportation conveyor 2A (see FIG. 31, if necessary), is easily disposed in the discharge region RG2.

### (Laser Beam Machine Apparatus 1A)

As illustrated in FIG. 1, the laser beam machine apparatus 1A includes: the dross transportation conveyor 2A; the laser beam irradiator 60; the mover 7, and the controller 8. Additionally, the laser beam machine apparatus 1A may include the workpiece support component 90.

Since the dross transportation conveyor 2A has already been described, the repeated description of the dross transportation conveyor 2A will be omitted.

As illustrated in FIG. 26, the laser beam irradiator 60 includes the laser head 61. The laser head 61 includes an emission opening OP, which emits the laser beam. The laser beam irradiator 60 may include a laser light source 63 and an optical component 65 (for example, an optical fiber or a similar component) that transmits the laser beam from the laser light source 63 to the laser head 61.

The mover 7 moves the laser head 61 relative to the workpiece support component 90. The mover 7 also moves the laser head 61 relative to the workpiece W, which is supported by the workpiece support component 90. It is to be noted that the workpiece W, which is supported by the workpiece support component 90, is, for example, a plate material.

In an example illustrated in FIG. 26, the mover 7 includes: mover bodies (71a; 73a), which support the laser head 61; and drivers (71b; 73b), which respectively move the mover bodies (71a; 73a).

In the example illustrated in FIG. 26, the mover 7 includes a first mover 71. The first mover 71 includes: a first mover body 71a, which supports the laser head 61; and a first driver 71b (for example, a first motor), which moves the first mover body 71a.

In the example illustrated in FIG. 26, the first mover body 71a functions as a Z saddle, and the first driver 71b functions as a Z-axis driver. The first driver 71b moves the first mover body 71a in a direction parallel to the vertical direction (in other words, Z-axis direction). More specifically, the first driver 71b is capable of moving the first mover body 71a downward so that the first mover body 71a approaches the workpiece support component 90. In addition, the first driver 71b is capable of moving the first mover body 71a upward so that the first mover body 71a moves away from the workpiece support component 90.

In the example illustrated in FIG. 26, the mover 7 includes a second mover 73. The second mover 73 includes: a second mover body 73a, and a second driver 73b (for example, a second motor), which moves the second mover body 73a. The second mover body 73a supports the first mover body 71a to be movable in a direction parallel to the vertical direction.

In the example illustrated in FIG. 26, the second mover body 73a functions as a Y saddle, and the second driver 73b functions as a Y-axis driver. The second driver 73b moves the second mover body 73a in a direction parallel to the horizontal plane (more specifically, Y-axis direction).

In an example illustrated in FIG. 27, the mover 7 includes a third mover 75. The third mover 75 includes: a third mover body 75a; and a third driver 75b (for example, a third motor), which moves the third mover body 75a. The third mover body 75a supports the second mover body 73a to be movable in a direction parallel to Y-axis direction.

In the example illustrated in FIG. 27, the third mover body 75a functions as an X saddle, and the third driver 75b functions as an X-axis driver. The third driver 75b moves the third mover body 75a in a direction parallel to the horizontal plane (more specifically, X-axis direction perpendicular to Z axis and Y axis).

As illustrated in FIG. 26, the third mover body 75a may be made up of a gate-shaped structure. In the example illustrated in FIG. 27, the third mover body 75a is movable to traverse the machine region RG1 in a plan view. The third mover body 75a is supported by a base 70, so that third mover body 75a is movable in a direction parallel to X-axis direction.

In an example illustrated in FIG. 28, the workpiece support component 90 includes a pin support for supporting a workpiece that is a plate material. Such a pin support includes a plurality of top portions 92 for supporting the workpiece W, which is the plate material.

In the example illustrated in FIG. 28, the workpiece support component 90 includes a plurality of plate members 91, each of which is disposed in an upright attitude with respect to a horizontal plane (for example, X-Y plane in FIG. 28). Each of the plurality of plate members 91 includes an edge portion EG having a saw blade shape.

The workpiece support component 90 may include equal to or more than 10 plate members 91, each of which is disposed in an upright attitude with respect to the horizontal plane, or may include equal to or more than 20 plate members 91, each of which is disposed in the upright attitude with respect to the horizontal plane. Each plate member 91 is, for example, made of metal.

In the example illustrated in FIG. 28, the workpiece support component 90 is a pallet PT, which is transferable. The pallet PT includes: a plurality of plate members 91; and a frame body 93, to which the plurality of plate members 91 are attached. A bottom portion of the frame body 93 defines a bottom opening. The dross D, which is generated by the irradiation of the laser beam LB on the workpiece W, passes through a gap between the two adjacent plate members 91 and the bottom opening defined by the frame body 93, and falls toward the dross transportation conveyor 2A.

As illustrated in FIG. 29, the laser beam machine apparatus 1A may include a transferer 11, which transfers the workpiece support component 90. The transferer 11 transfers the workpiece support component 90 from the machine region RG1 to a removal region RG3. Then, a machined workpiece Wb (more specifically, a machined plate material) is removed from the workpiece support component 90, which is disposed in the removal region RG3. As illustrated in FIG. 30, the machined workpiece Wb may be removed by using a sucker 121, which is capable of sucking the machined workpiece Wb, or may be removed by using a fork capable of scooping up the machined workpiece Wb. Alternatively, the machined workpiece Wb may be removed by a robot or an operator.

In an example illustrated in FIG. 30, the laser beam machine apparatus 1A includes a workpiece transferer 12 (for example, a robot hand), which transfers a workpiece before machining and a machined workpiece Wb. The workpiece transferer 12 may be a plate material transferer 12a, which transfers a workpiece that is a plate material. The plate material transferer 12a may include a plurality of suckers 121, which suck the workpiece that is the plate material, or may include a fork that supports the workpiece that is the plate material from below.

In the example illustrated in FIG. 1, the laser beam machine apparatus 1A includes the container 13, which receives the dross D from the dross transportation conveyor 2A. The container 13 is disposed immediately below the dross transportation conveyor 2A in the discharge region RG2.

The laser beam machine apparatus 1A may include the second transportation conveyor 15, which receives the dross D from the dross transportation conveyor 2A. In an example illustrated in FIG. 31, a dross transportation surface of the second transportation conveyor 15 is disposed immediately below the dross transportation conveyor 2A in the discharge region RG2. In the example illustrated in FIG. 31, the second transportation conveyor 15 transports the dross that has been received from the dross transportation conveyor 2A to the container 13.

In an example illustrated in FIG. 32, the controller 8 controls the laser beam irradiator 60 and the mover 7 (for example, the first driver 71b, the second driver 73b, and the third driver 75b). The controller 8 may control the transferer 11 (see FIG. 29), which transfers the workpiece support component 90, and/or the workpiece transferer 12 (see FIG. 30), which transfers the workpiece W. The controller 8 may also control the driver 29 of the dross transportation conveyor 2A.

In an example illustrated in FIG. 33, the controller 8 transmits an emission command R1 to the laser beam irradiator 60 (for example, the laser light source 63), and causes the laser beam LB to be emitted from the laser head 61. More specifically, the controller 8 transmits the emission command R1 to the laser beam irradiator 60 (for example, the laser light source 63), and the laser beam irradiator 60, which receives the emission command R1, emits the laser beam LB from the laser head 61 (more specifically, the emission opening of the laser head 61).

In the example illustrated in FIG. 33, the controller 8 transmits a movement command S to the mover 7, and moves the laser head 61. More specifically, the controller 8 transmits the movement command S to the mover 7, and the mover 7, which receives the movement command S, moves the laser head 61.

As illustrated in FIG. 33, the controller 8 includes: a hardware processor 80 (hereinafter, simply referred to as a "processor 80"); a memory 82; a communication circuit 84; and an inputter 86 (for example, a display 862 equipped with a touch panel). The processor 80, the memory 82, the communication circuit 84, and the inputter 86 are connected with each other through a bus 88. Data necessary for machining the workpiece W (for example, workpiece data 826 including shape data of the workpiece W and machine position data of the workpiece W) may be input into the controller 8 via the inputter 86, or may be input into the controller 8 from another computer via the communication circuit 84. It is to be noted that the inputter 86 is not limited to the display 862, which is equipped with a touch panel. For example, the controller 8 may include: the inputter 86 such as a button, a switch, a lever, a pointing device, or a keyboard; and a display that displays data that has been input into the inputter 86 or other information.

The memory 82 stores data such as the workpiece data 826 and programs such as a machining program 822. The memory 82 is a storage medium readable by the processor 80 of the controller 8. The memory 82 may be, for example, a non-volatile or volatile semiconductor memory such as a RAM, a ROM, or a flash memory, may be a magnetic disk, or may be a memory in another format.

The processor 80 of the controller 8 executes the machining program 822, which is stored in the memory 82, and thus the controller 8 generates a control command. In addition, the communication circuit 84 transmits such a control command to to-be-controlled equipment (more specifically, the laser beam irradiator 60, the mover 7, the transferer 11, the workpiece transferer 12, and the driver 29). In this manner, the processor 80 executes the machining program 822, and thus the controller 8 is capable of controlling the laser beam irradiator 60, the mover 7, the transferer 11, the workpiece transferer 12, and the driver 29.

The controller 8 may control the moving speed of the group of transportation plates 3 in conjunction with the control of at least one of the laser beam irradiator 60 and the mover 7.

For example, while the laser beam irradiator 60 stops emission of the laser beam LB, the controller 8 may control the driver 29 so that the group of transportation plates 3 moves at a first speed (a speed other than zero), and while the laser beam irradiator 60 is emitting the laser beam LB, the controller 8 may control the driver 29 so that the group of transportation plates 3 move at a second speed faster than the first speed.

For example, the controller 8 may control the driver 29 to change the moving speed of the group of transportation plates 3 in accordance with the magnitude of the output of the laser beam LB emitted by the laser beam irradiator 60 or the type of machining performed by the laser beam irradiator 60 (for example, drilling or cutting).

### (Cooler 95)

As illustrated in FIG. 34, the laser beam machine apparatus 1A may include a cooler 95, which forcibly cools the group of transportation plates 3.

For example, the laser beam machine apparatus 1A may include a cooler 95a of an air-cooling type for blowing air onto the group of transportation plates 3. In an example illustrated in FIG. 34, the cooler 95a includes an air injector 96, which blows air onto the back surface 3n of each transportation plate 3 in the group of transportation plates 3.
Alternatively or additionally, the cooler 95a may include an air injector for blowing air onto the transportation surface 3u of each transportation plate 3 in the group of transportation plates 3.

Alternatively or additionally, the laser beam machine apparatus 1A may include a cooler 95b of a liquid-cooling type for cooling the group of transportation plates 3 with a liquid. In an example illustrated in FIG. 34, the cooler 95b includes a liquid bath 97 (for example, a water tank), which is disposed so that the circling orbit of the group of transportation plates 3 passes through the liquid bath 97. The group of transportation plates 3 passes through the liquid (for example, water) in the liquid tank 97, and are then cooled. Furthermore, the liquid that has adhered to the surfaces of the group of transportation plates 3 is vaporized by the irradiation of the laser beam (vaporization heat), thereby eliminating or minimizing a temperature rise of the transportation plates 3.

### (Second Embodiment)

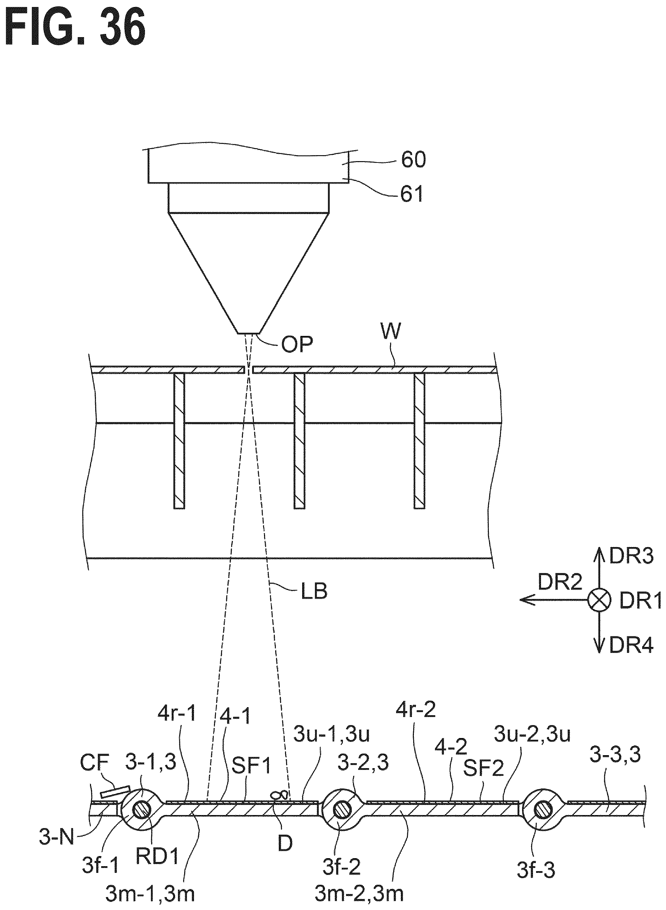

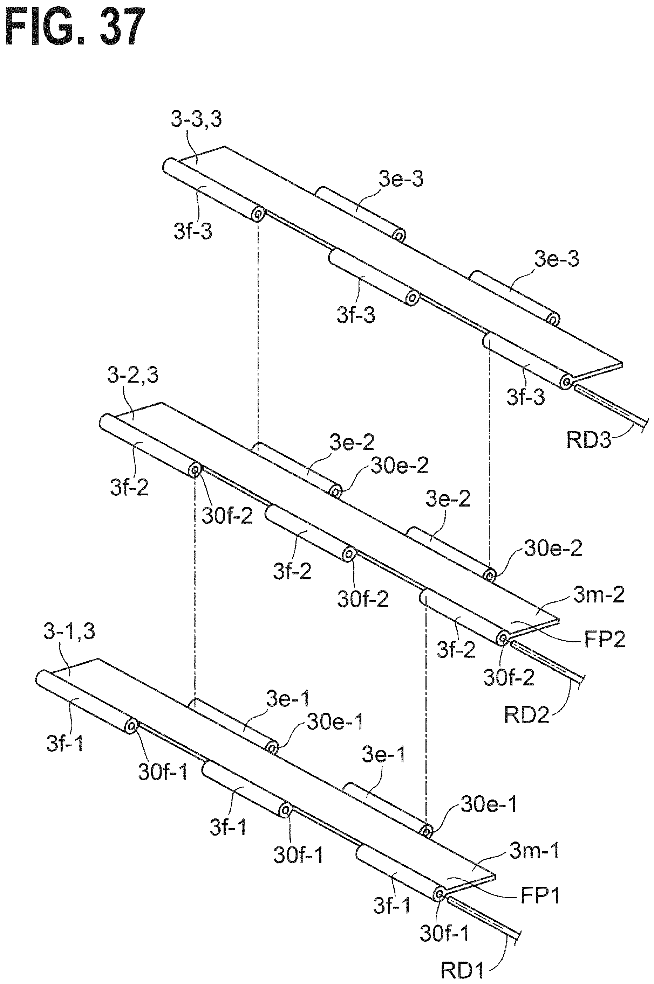

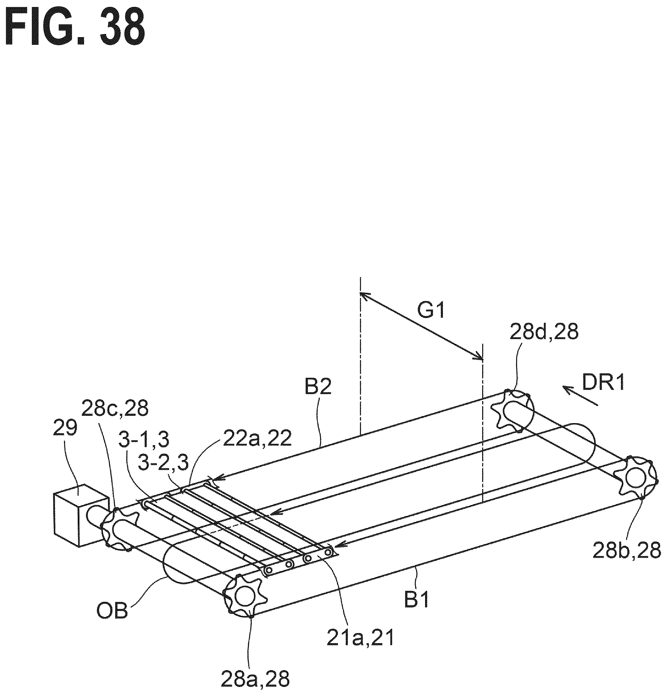

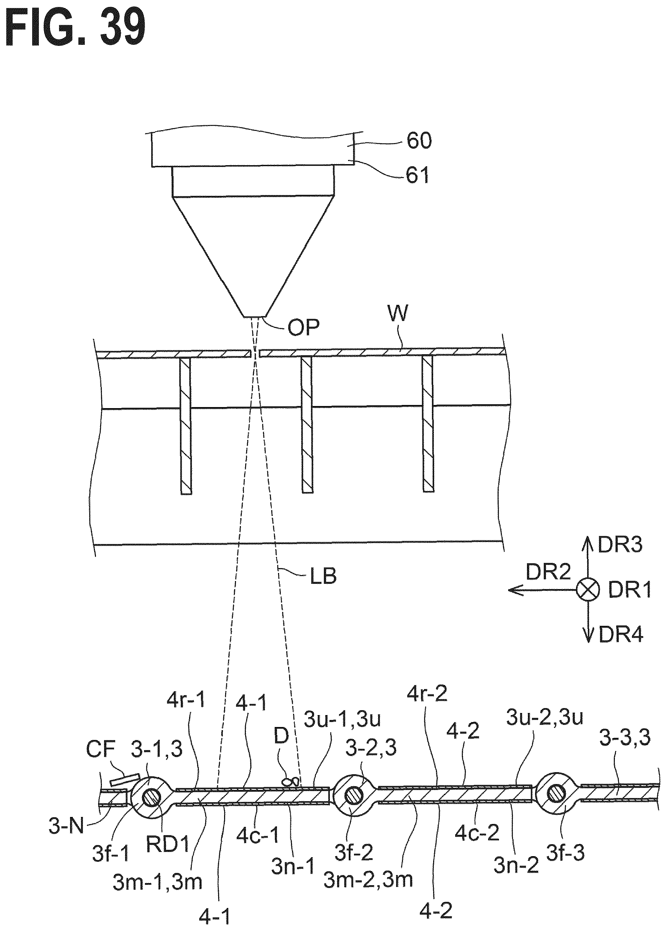

Referring to FIGs. 35 to 41, a dross transportation conveyor 2B and a laser beam machine apparatus 1B according to a second embodiment will be described. FIG. 35 is a schematic cross-sectional view of a laser beam machine apparatus 1B according to the second embodiment. FIG. 36 is a schematic cross-sectional view of a part of the laser beam machine apparatus 1B according to the second embodiment. FIG. 37 is an exploded perspective view of a part of a group of transportation plates 3. FIG. 38 is a schematic perspective view of a state in which the group of transportation plates 3, including the first transportation plate 3-1 and the second transportation plate 3-2, is movable along the circling orbit OB. FIGs. 39 to 41 are each a schematic cross-sectional view of a part of the laser beam machine apparatus 1B according to the second embodiment.

The dross transportation conveyor 2B according to the second embodiment is different from the dross transportation conveyor 2A according to the first embodiment in that each transportation plate 3 in the group of transportation plates 3 is hinge-coupled with another transportation plate.

In the second embodiment, differences from the first embodiment will be mainly described. On the other hand, in the second embodiment, repeated descriptions of the matters that have been described in the first embodiment will be omitted. Therefore, it is needless to say that the matters that have been described in the first embodiment are applicable to the second embodiment, even though they are not explicitly described in the second embodiment. On the contrary, all matters to be described in the second embodiment are applicable to the first embodiment.

In an example illustrated in FIGs. 35 and 36, the dross transportation conveyor 2B according to the second embodiment includes a group of transportation plates 3, which transports dross generated by irradiation of the laser beam on a workpiece with, and the group of transportation plates 3 includes a first transportation plate 3-1, which extends in the first direction DR1, and a second transportation plate 3-2, which is disposed to be adjacent to the first transportation plate 3-1, and which extends in the first direction DR1.

As illustrated in FIG. 36, the dross transportation conveyor 2B includes the first temperature rise prevention surface 4-1 and the second temperature rise prevention surface 4-2.

The first temperature rise prevention surface 4-1 covers at least a part of the first transportation plate 3-1. In addition, the first temperature rise prevention surface 4-1 prevents the temperature rise of the first transportation plate 3-1 due to the energy of the laser beam LB.

The second temperature rise prevention surface 4-2 covers at least a part of the second transportation plate 3-2. Further, the second temperature rise prevention surface 4-2 prevents the temperature rise of the second transportation plate 3-2 due to the energy of the laser beam LB.

In the example illustrated in FIG. 35, the laser beam machine apparatus 1B according to the second embodiment includes: the above-described dross transportation conveyor 2B; the laser beam irradiator 60 including the laser head 61, which irradiates the workpiece W with a laser beam; the mover 7, which moves the laser head 61 relative to the workpiece support component 90 for supporting the workpiece W; the laser beam irradiator 60; and the controller 8, which controls the mover 7.

Therefore, the dross transportation conveyor 2B and the laser beam machine apparatus 1B according to the second embodiment have the same effects as those of the dross transportation conveyor 2A and the laser beam machine apparatus 1A according to the first embodiment.

As illustrated in FIG. 37, the first rear end portion 3e-1 of the first transportation plate 3-1 and the second front end portion 3f-2 of the second transportation plate 3-2 are hinge-coupled with each other. In the example illustrated in FIG. 37, a rod (hereinafter, referred to as a "second rod RD2") is disposed to pass through both the first rear end portion 3e-1 of the first transportation plate 3-1 and the second front end portion 3f-2 of the second transportation plate 3-2, and thus the first rear end portion 3e-1 of the first transportation plate 3-1 and the second front end portion 3f-2 of the second transportation plate 3-2 are hinge-coupled with each other. In addition, a rod (hereinafter, referred to as a "third rod RD3") is disposed to pass through both the second rear end portion 3e-2 of the second transportation plate 3-2 and the third front end portion 3f-3 of the third transportation plate 3-3, and thus the second rear end portion 3e-2 of the second transportation plate 3-2 and the third front end portion 3f-3 of the third transportation plate 3-3 are hinge-coupled with each other.

### (Optional and Additional Configurations)

Subsequently, referring to FIGs. 1 to 41, optional and additional configurations that are adoptable in the dross transportation conveyor 2B according to the second embodiment and the laser beam machine apparatus 1B will be described.

### (Dross Transportation Conveyor 2B)

In the example illustrated in FIG. 35, the dross transportation conveyor 2B is partially disposed immediately below the laser beam irradiator 60. In addition, the group of transportation plates 3 of the dross transportation conveyor 2B is configured to be movable across the machine region RG1 (more specifically, a region immediately below the laser beam irradiator 60).

In the example illustrated in FIG. 35, the group of the transportation plates 3 transports the dross from the machine region RG1 to the discharge region RG2. In the example illustrated in FIG. 35, each transportation plate 3 in the group of transportation plates 3 is reversed (more specifically, makes a turn by 180 degrees around a horizontal shaft) in the discharge region RG2. As a result, the dross D transported by the group of transportation plates 3 is discharged from the group of transportation plates 3 in the discharge region RG2. It is to be noted that when the cut-off pieces CF (see FIG. 36) are transported by the group of transportation plates 3, the cut-off pieces CF are also discharged from the group of transportation plates 3 in the discharge region RG2.

In the example illustrated in FIG. 38, the dross transportation conveyor 2B includes: the first endless component 21 (more specifically, the first endless chain 21a); the second endless component 22 (more specifically, the second endless chain 22a); and the driver 29. The first endless component 21 and the second endless component 22 support the group of transportation plates 3. More specifically, the group of transportation plates 3 is attached to the first endless component 21 and the second endless component 22.

The first endless component 21 and the second endless component 22 are directly or indirectly driven by the driver 29. Since the first endless component 21, the second endless component 22, and the driver 29 have been described in the first embodiment, repeated descriptions of these configurations will be omitted.

### (Group of Transportation Plates 3)

The group of transportation plates 3 moves along the circling orbit OB. As illustrated in FIG. 38, the circling orbit OB of the group of transportation plates 3 is parallel to a first circling orbit B1 of the first endless chain 21a, and is parallel to the second circling orbit B2 of the second endless chain 22a. In the example illustrated in FIG. 35, the group of transportation plates 3 is disposed continuously to form an annular transportation body.

The length of each transportation plate 3 in the group of transportation plates 3 is, for example, equal to or longer than one meter and equal to or shorter than three meters. The width of each transportation plate 3 in the group of transportation plates 3 is, for example, equal to or larger than 40 millimeters and equal to or smaller than 200 millimeters. The plate thickness of each transportation plate 3 in the group of transportation plates 3 (more specifically, the plate thickness of the middle portion 3m of each transportation plate 3 in the group of transportation plates 3) is, for example, equal to or smaller than five millimeters or equal to or smaller than three millimeters. Each transportation plate 3 in the group of transportation plates 3 is made of metal. Each transportation plate 3 in the group of transportation plates 3 is made of, for example, steel, more specifically, a hot-rolled soft steel plate, a cold-rolled steel plate, or a cold-rolled stainless steel plate.

In the example illustrated in FIG. 37, the first transportation plate 3-1 includes: the first front end portion 3f-1; the first rear end portion 3e-1; and the first middle portion 3m-1, which connects the first front end portion 3f-1 with the first rear end portion 3e-1. A plurality of front reception portions 30f-1 for receiving a first rod RD1 (more specifically, a plurality of through hole portions into which the first rod RD1 is inserted) are formed in the first front end portion 3f-1 of the first transportation plate 3-1. In addition, a plurality of rear reception portions 30e-1 for receiving a second rod RD2 (more specifically, a plurality of through hole portions into which a second rod RD2 is inserted) are formed in the first rear end portion 3e-1 of the first transportation plate 3-1.

In the example illustrated in FIG. 37, the second transportation plate 3-2 includes: the second front end portion 3f-2; the second rear end portion 3e-2; and the second middle portion 3m-2, which connects the second front end portion 3f-2 with the second rear end portion 3e-2. A plurality of front reception portions 30f-2 for receiving the second rod RD2 (more specifically, a plurality of through hole portions into which the second rod RD2 is inserted) are formed in the second front end portion 3f-2 of the second transportation plate 3-2. Further, a plurality of rear reception portions 30e-2 for receiving a third rod RD3 (more specifically, a plurality of through hole portions into which the third rod RD3 is inserted) are formed in the second rear end portion 3e-2 of the second transportation plate 3-2.

### (First Example of Temperature Rise Prevention Surface)

In an example illustrated in FIG. 36, the first temperature rise prevention surface 4-1 includes a surface of the first laser beam reflection layers 4r-1, which covers at least a part of the first transportation surface 3u-1 of the first transportation plate 3-1. In other words, at least a part of the first transportation surface 3u-1 of the first transportation plate 3-1 is covered with the first laser beam reflection layer 4r-1.

The first laser beam reflection layer 4r-1, which covers at least a part of the first transportation plate 3-1, is made of a material having a high laser reflectivity (for example, copper, silver, or aluminum). The first transportation plate 3-1 is made of, for example, steel, more specifically, a hot-rolled soft steel plate, a cold-rolled steel plate, or a cold-rolled stainless steel plate.

The laser reflectivity of the first laser beam reflection layer 4r-1 is higher than the laser reflectivity of the first transportation plate 3-1. The laser reflectivity of the first laser beam reflection layer 4r-1 is, for example, equal to or larger than 70%, equal to or larger than 80%, or equal to or larger than 90%.

The first laser beam reflection layer 4r-1 may cover only a part of the first transportation surface 3u-1 of the first transportation plate 3-1 (for example, the transportation surface of the first middle portion 3m-1 of the first transportation plate 3-1). Alternatively, the first laser beam reflection layer 4r-1 may cover the entirety of the first transportation surface 3u-1 of the first transportation plate 3-1. In the example illustrated in FIG. 36, the first laser beam reflection layer 4r-1 covers at least a part of the flat transportation surface SF1 of the first transportation plate 3-1.

Since the first laser beam reflection layer 4r-1 has been described in the first embodiment, the repeated description of the first laser beam reflection layer 4r-1 will be omitted.

In the example illustrated in FIG. 36, the second temperature rise prevention surface 4-2 includes a surface of the second laser beam reflection layers 4r-2, which covers at least a part of the second transportation surface 3u-2 of the second transportation plate 3-2. In other words, at least a part of the second transportation surface 3u-2 of the second transportation plate 3-2 is covered with the second laser beam reflection layer 4r-2.

The second laser beam reflection layer 4r-2, which covers at least a part of the second transportation plate 3-2, is made of a material having a high laser reflectivity (for example, copper, silver, or aluminum). The second transportation plate 3-2 is made of, for example, steel, more specifically, a hot-rolled soft steel plate, a cold-rolled steel plate, or a cold-rolled stainless steel plate.

The laser reflectivity of the second laser beam reflection layer 4r-2 is higher than the laser reflectivity of the second transportation plate 3-2. The laser reflectivity of the second laser beam reflection layer 4r-2 is, for example, equal to or larger than 70%, equal to or larger than 80%, or equal to or larger than 90%.

The second laser beam reflection layer 4r-2 may cover only a part of the second transportation surface 3u-2 of the second transportation plate 3-2 (for example, the transportation surface of the second middle portion 3m-2 of the second transportation plate 3-2). Alternatively, the second laser beam reflection layer 4r-2 may cover the entirety of the second transportation surface 3u-2 of the second transportation plate 3-2. In the example illustrated in FIG. 36, the second laser beam reflection layer 4r-2 covers at least a part of the flat transportation surface SF2 of the second transportation plate 3-2.

Since the second laser beam reflection layer 4r-2 has been described in the first embodiment, the repeated description of the second laser beam reflection layer 4r-2 will be omitted.

### (Second Example of Temperature Rise Prevention Surface)

In an example illustrated in FIG. 39, the first temperature rise prevention surface 4-1 includes a surface of the first heat conduction layer 4c-1, which covers at least a part of the first back surface 3n-1 of the first transportation plate 3-1 (that is, a surface at the opposite end of the first transportation surface 3u-1 in the first transportation plate 3-1). In other words, at least a part of the first back surface 4n-1 of the first transportation plate 3-1 is covered with the first heat conduction layer 4c-1.

The heat conductivity of the first heat conduction layer 4c-1 is higher than the heat conductivity of the first transportation plate 3-1. The first heat conduction layer 4c-1 is made of a material having a high heat conductivity (for example, copper, silver, or aluminum). The first transportation plate 3-1 is made of, for example, steel, more specifically, a hot-rolled soft steel plate, a cold-rolled steel plate, or a cold-rolled stainless steel plate.

The first heat conduction layer 4c-1 may cover only a part of the first back surface 3n-1 of the first transportation plate 3-1 (for example, the back surface of the first middle portion 3m-1 of the first transportation plate 3-1). Alternatively, the first heat conduction layer 4c-1 may cover the entirety of the first back surface 3n-1 of the first transportation plate 3-1.

Since the first heat conduction layer 4c-1 has been described in the first embodiment, the repeated description of the first heat conduction layer 4c-1 will be omitted.

In the example illustrated in FIG. 39, the second temperature rise prevention surface 4-2 includes a surface of the second heat conduction layer 4c-2, which covers at least a part of the second back surface 3n-2 of the second transportation plate 3-2 (that is, a surface at the opposite end of the second transportation surface 3u-2 in the second transportation plate 3-2). In other words, at least a part of the second back surface 4n-2 of the second transportation plate 3-2 is covered with the second heat conduction layer 4c-2.

The heat conductivity of the second heat conduction layer 4c-2 is higher than the heat conductivity of the second transportation plate 3-2. The second heat conduction layer 4c-2 is made of a material having a high heat conductivity (for example, copper, silver, or aluminum). The second transportation plate 3-2 is made of, for example, steel, more specifically, a hot-rolled soft steel plate, a cold-rolled steel plate, or a cold-rolled stainless steel plate.

The second heat conduction layer 4c-2 may cover only a part of the second back surface 3n-2 of the second transportation plate 3-2 (for example, the back surface of the second middle portion 3m-2 of the second transportation plate 3-2). Alternatively, the second heat conduction layer 4c-2 may cover the entirety of the second back surface 3n-2 of the second transportation plate 3-2.

Since the second heat conduction layer 4c-2 has already been described in the first embodiment, the repeated description of the second heat conduction layer 4c-2 will be omitted.

### (Third Example of Temperature Rise Prevention Surface)

A third example of the temperature rise prevention surface is a combination of the first example of the temperature rise prevention surface and the second example of the temperature rise prevention surface. For example, as illustrated in FIG. 39, at least a part of the first transportation surface 3u-1 of the first transportation plate 3-1 is covered with the first laser beam reflection layer 4r-1, and at least a part of the first back surface 3n-1 of the first transportation plate 3-1 is covered with the first heat conduction layer 4c-1. In addition, at least a part of the second transportation surface 3u-2 of the second transportation plate 3-2 is covered with the second laser beam reflection layer 4r-2, and at least a part of the second back surface 3n-2 of the second transportation plate 3-2 is covered with the second heat conduction layer 4c-2.

In the first example of the temperature rise prevention surface, the second example of the temperature rise prevention surface, or the third example of the temperature rise prevention surface, the main material of the first transportation plate 3-1 is, for example, steel. The main material of the second transportation plate 3-2 is, for example, steel.

In the first example of the temperature rise prevention surface, the second example of the temperature rise prevention surface, or the third example of the temperature rise prevention surface, the first temperature rise prevention surface 4-1 is made of, for example, copper, silver, or aluminum. More specifically, the first temperature rise prevention surface 4-1 is made of copper, a copper alloy, aluminum, or an aluminum alloy. The second temperature rise prevention surface 4-2 is made of, for example, copper, silver, or aluminum. More specifically, the second temperature rise prevention surface 4-2 is made of copper, a copper alloy, aluminum, or an aluminum alloy.

### (Fourth Example of Temperature Rise Prevention Surface)

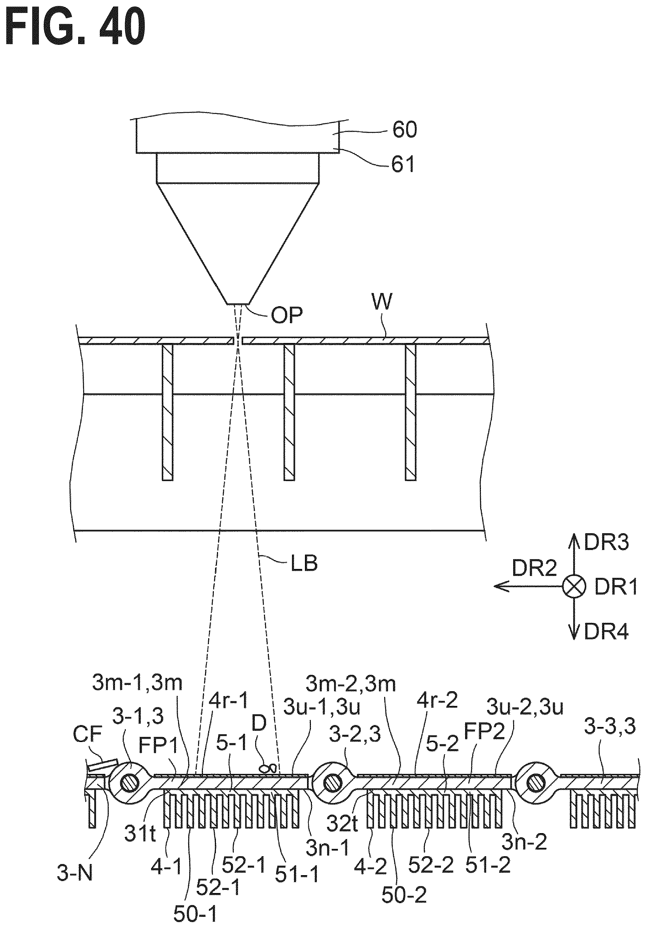

In an example illustrated in FIG. 40, the first temperature rise prevention surface 4-1 includes a surface of a first heat dissipation component 5-1, which is disposed in contact with at least a part of the first back surface 3n-1 of the first transportation plate 3-1.

In the example illustrated in FIG. 40, the dross transportation conveyor 2B includes the first heat dissipation component 5-1, which is supported by the first transportation plate 3-1. The first transportation plate 3-1 has a contact surface 31t in contact with the first heat dissipation component 5-1. The contact surface 31t includes at least a part of the first back surface 3n-1 of the first transportation plate 3-1.

The first heat dissipation component 5-1 is attached to the first transportation plate 3-1. The first heat dissipation component 5-1 may be attached to the first transportation plate 3-1 by welding, or may be attached to the first transportation plate 3-1 via an attachment member such as a bolt or an adhesive sheet.

In the example illustrated in FIG. 40, the first heat dissipation component 5-1 includes a first heat sink 50-1. The first heat sink 50-1 may include a first base portion 51-1 and a plurality of first heat dissipation pieces 52-1, which are disposed on the first base portion 51-1. The first heat dissipation component 5-1 may include, in addition to the first heat sink 50-1, a heat dissipation sheet (more specifically, a heat conductive sheet having a high heat conductivity) disposed between the first heat sink 50-1 and the first transportation plate 3-1. The first heat sink 50-1 is made of, for example, aluminum, copper, or ceramics.

In the example illustrated in FIG. 40, the first heat dissipation component 5-1 is disposed in contact with at least a part of the first middle portion 3m-1 (more specifically, the first flat portion FP1) of the first transportation plate 3-1.

Since the first heat dissipation component 5-1 has been described in the first embodiment, the repeated description of the first heat dissipation component 5-1 will be omitted.

In the example illustrated in FIG. 40, the second temperature rise prevention surface 4-2 includes a surface of a second heat dissipation component 5-2, which is disposed in contact with at least a part of the second back surface 3n-2 of the second transportation plate 3-2.

In the example illustrated in FIG. 40, the dross transportation conveyor 2B includes the second heat dissipation component 5-2, which is supported by the second transportation plate 3-2. The second transportation plate 3-2 has a contact surface 32t in contact with the second heat dissipation component 5-2. In addition, the contact surface 32t includes at least a part of the second back surface 3n-2 of the second transportation plate 3-2.

The second heat dissipation component 5-2 is attached to the second transportation plate 3-2. The second heat dissipation component 5-2 may be attached to the second transportation plate 3-2 by welding, or may be attached to the second transportation plate 3-2 via an attachment member such as a bolt or an adhesive sheet.

In the example illustrated in FIG. 40, the second heat dissipation component 5-2 includes the second heat sink 50-2. The second heat sink 50-2 may include a second base portion 51-2 and a plurality of second heat dissipation pieces 52-2, which are disposed on the second base portion 51-2. The second heat dissipation component 5-2 may include, in addition to the second heat sink 50-2, a heat dissipation sheet (more specifically, a heat conductive sheet having a high heat conductivity) disposed between the second heat sink 50-2 and the second transportation plate 3-2. The second heat sink 50-2 is made of, for example, aluminum, copper, or ceramics.

In the example illustrated in FIG. 40, the second heat dissipation component 5-2 is disposed in contact with at least a part of the second middle portion 3m-2 (more specifically, the second flat portion FP2) of the second transportation plate 3-2.

Since the second heat dissipation component 5-2 has been described in the first embodiment, the repeated description of the second heat dissipation component 5-2 will be omitted.

### (Fifth Example of Temperature Rise Prevention Surface)

In the first to fourth examples of the temperature rise prevention surface, the first temperature rise prevention surface 4-1 is provided in addition to the first transportation plate 3-1, and the second temperature rise prevention surface 4-2 is provided in addition to the second transportation plate 3-2. In the fifth example of the temperature rise prevention surface, the first transportation plate 3-1 itself has a temperature rise prevention surface that prevents the temperature rise of the first transportation plate 3-1, and the second transportation plate 3-2 itself has a temperature rise prevention surface that prevents the temperature rise of the second transportation plate 3-2.

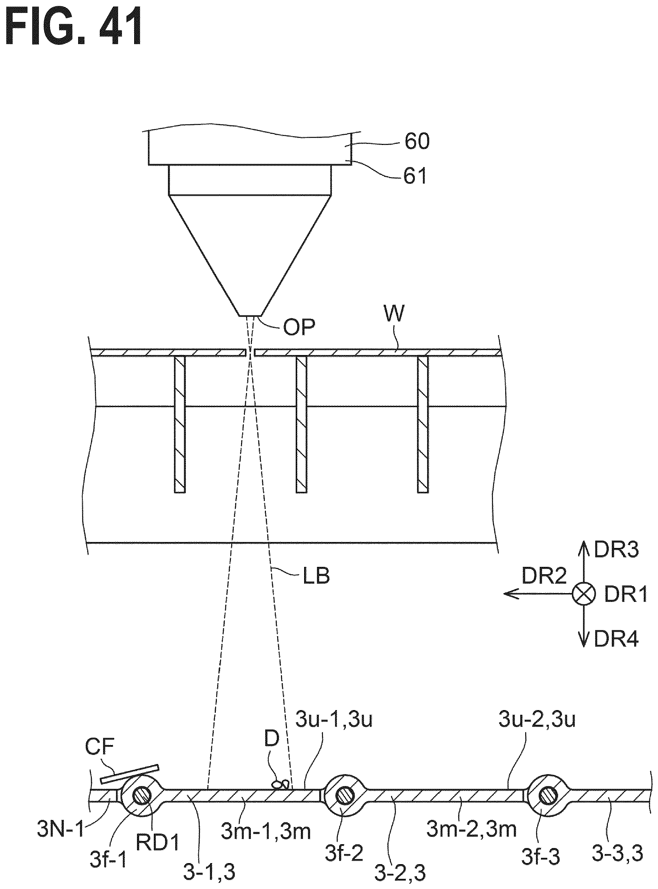

In an example illustrated in FIG. 41, the main material of the first transportation plate 3-1 is copper or aluminum. More specifically, the first transportation plate 3-1 is made of copper, a copper alloy, aluminum, or an aluminum alloy.

In the example illustrated in FIG. 41, at least a part of the first transportation surface 3u-1 of the first transportation plate 3-1 is made of copper, a copper alloy, aluminum, or an aluminum alloy. The entirety of the first transportation surface 3u-1 of the first transportation plate 3-1 may be made of copper, a copper alloy, aluminum, or an aluminum alloy. In the example illustrated in FIG. 41, the copper surface or the aluminum surface that constitutes at least a part of the first transportation surface 3u-1 of the first transportation plate 3-1 serves as the temperature rise prevention surface having a high laser reflectivity.

In the example illustrated in FIG. 41, the main material of the second transportation plate 3-2 is copper or aluminum. More specifically, the second transportation plate 3-2 is made of copper, a copper alloy, aluminum, or an aluminum alloy.

In the example illustrated in FIG. 41, at least a part of the second transportation surface 3u-2 of the second transportation plate 3-2 is made of copper, a copper alloy, aluminum, or an aluminum alloy. The entirety of the second transportation surface 3u-2 of the second transportation plate 3-2 may be made of copper, a copper alloy, aluminum, or an aluminum alloy. In the example illustrated in FIG. 41, the copper surface or the aluminum surface that constitutes at least a part of the second transportation surface 3u-2 of the second transportation plate 3-2 serves as the temperature rise prevention surface having a high laser reflectivity.

### (Laser Beam Machine Apparatus 1B)

As illustrated in FIG. 35, the laser beam machine apparatus 1B includes: the dross transportation conveyor 2B; the laser beam irradiator 60; the mover 7; and the controller 8. Additionally, the laser beam machine apparatus 1B may include the workpiece support component 90. Since the laser beam irradiator 60, the mover 7, the controller 8, and the workpiece support component 90 have already been described in the first embodiment, repeated descriptions of these configurations will be omitted.

### (Third Embodiment)

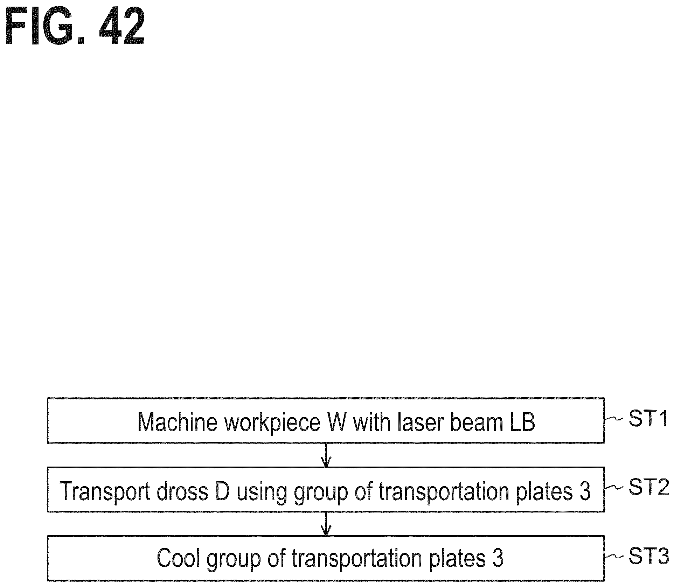

A workpiece machining method according to the third embodiment will be described with reference to FIGs. 1 to 42. FIG. 42 is a flowchart of an example of a workpiece machining method according to the third embodiment.

The workpiece machining method according to the third embodiment may be performed by using the laser beam machine apparatus 1A according to the first embodiment, may be performed by using the laser beam machine apparatus 1B according to the second embodiment, or may be performed by using another laser beam machine apparatus.

In a first step ST1, the workpiece W is machined. The first step ST1 is a workpiece machining process. In the workpiece machining process, the workpiece W is machined by the irradiation of the laser beam LB. More specifically, the workpiece W is irradiated with the laser beam LB from the laser head 61 of the laser beam irradiator 60, and thus the workpiece W is machined. The wavelength of the laser beam LB emitted from the laser head 61 of the laser beam irradiator 60 is, for example, equal to or longer than 1060 nanometers and equal to or shorter than 1080 nanometers.

The workpiece W to be machined in the workpiece machining process (the first step ST1) is, for example, a plate material. The workpiece machining process may include: moving the laser head 61, which emits the laser beam LB; and cutting the workpiece W with the laser beam. In addition, the workpiece machining process may include emitting the laser beam LB from the laser head 61, which is temporarily in a stationary state, to drill the workpiece W with the laser beam. The workpiece W is machined by the laser beam LB, and then a product (for example, a plate product) is formed from the workpiece W.

In the workpiece machining process (the first step ST1), the workpiece W is irradiated with the laser beam LB, and then the dross D is generated from the workpiece W. Additionally, the workpiece W is irradiated with the laser beam LB, and then the cut-off pieces CF may be generated from the workpiece W. The dross D and/or the cut-off pieces CF that have been generated fall downward in the machine region RG1. The dross D and/or the cut-off pieces CF, which fall downward, are received by the dross transportation conveyor 2.

In the workpiece machining process (the first step ST1), the laser beam LB that passes through the workpiece W reaches the dross transportation conveyor 2. The laser beam LB that reaches the dross transportation conveyor 2 raises the temperature of the group of transportation plates 3 including the first transportation plate 3-1 and the second transportation plate 3-2. The first transportation plate 3-1, the second transportation plate 3-2, and another plate are deformed by thermal expansion.

In a second step ST2, the dross D is transported. The second step ST2 is a dross transporting process. In the dross transporting process, the dross D, which is generated by the irradiation of the laser beam LB on the workpiece W, is transported by using the group of transportation plates 3 including the first transportation plate 3-1, which extends in the first direction DR1, and the second transportation plate 3-2, which is disposed to be adjacent to the first transportation plate 3-1, and which extends in the first direction DR1. More specifically, the group of transportation plates 3 transports the dross D from the machine region RG1 to the discharge region RG2.

The second step ST2 (the dross transporting process) is performed in parallel with the first step ST1 (the workpiece machining process). More specifically, the workpiece W is irradiated with the laser beam LB from the laser beam irradiator 60 in a state in which the dross transportation conveyor 2 is being driven (in other words, in a state in which the group of transportation plates 3 is moving along the circling orbit OB). By the irradiation of the laser beam LB on the workpiece W, the dross D and/or the cut-off pieces CF are intermittently or continuously generated, and the generated dross D and/or the generated cut-off pieces CF are sequentially transported by the dross transportation conveyor 2.

In the example illustrated in FIG. 12, FIG. 14, FIG. 15, FIG. 17, FIG. 18, FIG. 19, FIG. 36, FIG. 39, or FIG. 40, the workpiece machining process (the process of machining the workpiece W) is performed in a state in which the temperature rise of the first transportation plate 3-1 due to the energy of the laser beam LB is prevented by the first temperature rise prevention surface 4-1, which covers at least a part of the first transportation plate 3-1. In addition, the workpiece machining process (the process of machining the workpiece W) is performed in a state in which the temperature rise of the second transportation plate 3-2 due to the energy of the laser beam LB is prevented by the second temperature rise prevention surface 4-2, which covers at least a part of the second transportation plate 3-2.

For example, in the example described in FIG. 12, FIG. 14, FIG. 18, FIG. 36, FIG. 39, or FIG. 40, the workpiece machining process (the process of machining the workpiece W) is performed in a state in which the temperature rise of the first transportation plate 3-1 due to the energy of the laser beam LB is prevented by the first laser beam reflection layer 4r-1, which covers at least a part of the first transportation surface 3u-1 of the first transportation plate 3-1. For example, while the workpiece machining process (the process of machining the workpiece W) is being performed, the laser beam LB emitted from the laser beam irradiator 60 is partially reflected by the first laser beam reflection layer 4r-1. In addition, the workpiece machining process (the process of machining the workpiece W) is performed in a state in which the temperature rise of the second transportation plate 3-2 due to the energy of the laser beam LB is prevented by the second laser beam reflection layer 4r-2, which covers at least a part of the second transportation surface 3u-2 of the second transportation plate 3-2. For example, while the workpiece machining process (the process of machining the workpiece W) is being performed, the laser beam LB emitted from the laser beam irradiator 60 is partially reflected by the second laser beam reflection layer 4r-2.

For example, in the example illustrated in FIG. 15, FIG. 17, FIG. 18, or FIG. 39, the workpiece machining step (the process of machining the workpiece W) is performed in a state in which the temperature rise of the first transportation plate 3-1 due to the energy of the laser beam LB is prevented by the first heat conduction layer 4c-1, which covers at least a part of the first back surface 3n-1 of the first transportation plate 3-1. For example, while the workpiece machining process (the process of machining the workpiece W) is being performed, the heat that has been generated by irradiation of the laser beam on the first transportation plate 3-1 is diffused by the first heat conduction layer 4c-1. The workpiece machining process (the process of machining the workpiece W) is performed in a state in which the temperature rise of the second transportation plate 3-2 due to the energy of the laser beam LB is prevented by the second heat conduction layer 4c-2, which covers at least a part of the second back surface 3n-2 of the second transportation plate 3-2. For example, while the workpiece machining process (the process of machining the workpiece W) is being performed, the heat that has been generated by irradiation of the laser beam on the second transportation plate 3-2 is diffused by the second heat conduction layer 4c-2.

For example, in the example illustrated in FIG. 19 or FIG. 40, the workpiece machining process (the process of machining the workpiece W) is performed in a state in which the temperature rise of the first transportation plate 3-1 due to the energy of the laser beam LB is prevented by the first heat dissipation component 5-1, which is disposed in contact with at least a part of the first back surface 3n-1 of the first transportation plate 3-1. For example, while the workpiece machining process (the process of machining the workpiece W) is being performed, the heat that has been generated due to the irradiation of the laser beam on the first transportation plate 3-1 is transferred from the first transportation plate 3-1 to the first heat dissipation component 5-1, and the first heat dissipation component 5-1 dissipates the heat received from the first transportation plate 3-1 into the air. In addition, the workpiece machining process (the process of machining the workpiece W) is performed in a state in which the temperature rise of the second transportation plate 3-2 due to the energy of the laser beam LB is prevented by the second heat dissipation component 5-2, which is disposed in contact with at least a part of the second back surface 3n-2 of the second transportation plate 3-2. For example, while the workpiece machining process (the process of machining the workpiece W) is being performed, the heat that has been generated due to the irradiation of the laser beam on the second transportation plate 3-2 is transferred from the second transportation plate 3-2 to the second heat dissipation component 5-2, and the second heat dissipation component 5-2 dissipates the heat received from the second transportation plate 3-2 into the air.

In the example illustrated in FIG. 12, FIG. 14, FIG. 15, FIG. 17, FIG. 18, FIG. 19, FIG. 24, FIG. 36, FIG. 39, FIG. 40, or FIG. 41, the workpiece machining process (the process of machining the workpiece W) is performed in a state in which the temperature rise of the first transportation plate 3-1 is prevented. Therefore, although the first transportation plate 3-1 is thermally deformed due to the irradiation of the laser beam, the large thermal deformation leading to the thermoplastic deformation is prevented. In addition, the workpiece machining process (the process of machining the workpiece W) is performed in a state in which the temperature rise of the second transportation plate 3-2 is prevented. Therefore, although the second transportation plate 3-2 is thermally deformed due to the irradiation of the laser beam, the large thermal deformation leading to the thermoplastic deformation is prevented.

In a third step ST3, the group of transportation plates 3 is cooled. The third step ST3 is a cooling process. The cooling process (the third step ST3) is performed by, for example, natural cooling. More specifically, after the machining of the workpiece W ends, the cooling process is performed while the group of transportation plates 3 is left as they are at room temperature.

Additionally, the cooling process may include forcibly cooling the group of transportation plates 3 using at least one of the cooler 95a of an air-cooling type and the cooler 95b of a liquid-cooling type. For example, as illustrated in FIG. 34, the cooling process may include blowing, by the cooler 95a of the air-cooling type, air onto the group of transportation plates 3. Alternatively or additionally, the cooling process may include causing the group of transportation plates 3 to pass through the liquid (for example, water) in the liquid bath 97. Further, the cooling process may include spraying, by the cooler 95b of the liquid-cooling type, the liquid (for example, water) onto the group of transportation plates 3.

Forcibly cooling the group of transportation plates 3 using at least one of the cooler 95a of the air-cooling type and the cooler 95b of the liquid-cooling type may be performed in parallel with the workpiece machining process (the first step ST1) and the dross transporting process (the second step ST2).

In the workpiece machining method according to the third embodiment, the thermoplastic deformation of the first transportation plate 3-1 is prevented, and thus the first transportation plate 3-1 that has been cooled in the cooling process returns to its original shape before the thermal deformation. Also, in the workpiece machining method according to the third embodiment, the thermoplastic deformation of the second transportation plate 3-2 is prevented, and thus the second transportation plate 3-2 that has been cooled in the cooling process returns to its original shape before the thermal deformation. By repeatedly performing the above-described first step ST1 to the above-described third step ST3, each transportation plate 3 in the group of transportation plates 3 may be plastically deformed to some extent, but plastic deformation that causes a failure in the operation of the dross transportation conveyor 2 is avoided.

The present invention is not limited to the above-described embodiments or modifications, and it is apparent that the embodiments or modifications can be appropriately modified or changed within the scope of the technical idea of the present invention. In addition, various techniques used in each embodiment or each modification are applicable to other embodiments or other modifications as long as a technical contradiction does not occur. Further, any additional configuration in each embodiment or each modification can be omitted as appropriate.

### Reference Signs List

1, 1A, 1B ... Laser beam machine apparatus, 2, 2A, 2B ... Dross transportation conveyer, 3 ... Transportation plate, 3-1 ... First transportation plate, 3-2 ... Second transportation plate, 3-3 ... Third transportation plate, 3-N ... Transportation plate, 3a, 3a -1, 3a-2, 3a-3 ... Left end portion, 3b, 3b-1, 3b-2, 3b-3 ... Right end portion, 3e ... Rear end portion, 3e-1 ... First rear end portion, 3e-2 ... Second rear end portion, 3e-3 ... Third rear end portion, 3e-N ... Rear end portion of transportation plate 3-N, 3f ... Front end portion, 3f-1 ... First front end portion, 3f-2 ... Second front end portion, 3f-3 ... Third front end portion, 3m ... Middle portion, 3m-1 ... First middle portion, 3m-2 ... Second middle portion, 3m-3 ... Third middle portion, 3n ... Back surface, 3n-1 ... First back surface, 3n-2 ... Second back surface, 3u ... Transportation surface, 3u-1 ... First transportation surface, 3u-2 ... Second transportation surface, 4-1 ... First temperature rise prevention surface, 4-2 ... Second temperature rise prevention surface, 4c-1 ... First heat conduction layer, 4c-2 ... Second heat conduction layer, 4n-1 ... First back surface, 4n-2 ... Second back surface, 4r-1 ... First laser beam reflection layer, 4r-2 ... Second laser beam reflection layer, 5-1 ... First heat dissipation component, 5-2 ... Second heat dissipation component, 7 ... Mover, 8 ... Controller, 11 ... Transferer, 12 ... Workpiece transferer, 12a ... Plate material transferer, 13 ... Container, 15 ... Second transportation conveyer, 21 ... First endless component, 21a ... First endless chain, 22 ... Second endless component, 22a ... Second endless chain, 28 ... Sprocket, 28a ... First sprocket, 28b ... Second sprocket, 28c ... Third sprocket, 28d ... Fourth sprocket, 29 ... Mover, 30e-1 ... Rear reception portion, 30e-2 ... Rear reception portion, 30f-1 ... Front reception portion, 30f-2 ... Front reception portion, 31t, 32t ... Contact surface, 50-1 ... First heat sink, 50-2 ... Second heat sink, 51-1 ... First base portion, 51-2 ... Second base portion, 52-1 ... First heat dissipation piece, 52-2 ... Second heat dissipation piece, 52f-1, 52f-2 ... Heat dissipation fin, 52p-1, 52p-2 ... Heat dissipation pin, 60 ... Laser beam irradiator, 61 ... Laser head, 63 ... Laser light source, 65 ... Optical component, 70 ... Base, 71 ... First mover, 71a ... First mover body, 71b ... First driver, 73 ... Second mover, 73a ... Second mover body, 73b ... Second driver, 75 ... Third mover, 75a ... Third mover body, 75b ... Third driver, 80 ... Hardware processor, 82 ... Memory, 84 ... Communication circuit, 86 ... Inputter, 88 ... Bus, 90 ... Workpiece support component, 91 ... Plate material, 92 ... Top portion, 93 ... Frame body, 95, 95a, 95b ... Cooler, 96 ... Air injector, 97 ... Liquid bath, 121 ... Sucker, 822 ... Machining program, 826 ... Workpiece data, 862 ... Display equipped with touch panel, BA1 ... First bent portion, BB1 ... Second bent portion, BA2 ... Third bent portion, BB2 ... Fourth bent portion, BT ... Bolt, CF ... Cut-off piece, CP, CP1, CP2 ... Convex-shaped curved portion, D ... Dross, EG ... Edge portion, FP1 ... First flat portion, FP2 ... Second flat portion, LB ... Laser beam, OB ... Circling orbit, OP ... Emission opening, PT ... Pallet, R1 ... Emission command, RD1 ... First rod, RD2 ... Second rod, RD3 ... Third rod, RG1 ... Machine region, RG2 ... Discharge region, RG3 ... Removal region, S ... Movement command, SD1, SD2 ... Concave-shaped back surface, SF1, SF2 ... Flat transportation surface, SN1, SN2 ... Flat back surface, SU1, SU2 ... Convex-shaped transportation surface, TP ... Upright portion, TP1 ... First upright portion, TP2 ... Second upright portion, W ... Workpiece, Wb ... Machined workpiece, h1, h2 ... Hole portion.

## Claims

1. A dross transportation conveyor comprising:
a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of a laser on a workpiece,
a first temperature rise prevention surface that covers at least a part of the first transportation plate and that prevents a temperature rise of the first transportation plate due to energy of the laser; and
a second temperature rise prevention surface that covers at least a part of the second transportation plate and that prevents the temperature rise of the second transportation plate due to the energy of the laser.

2. The dross transportation conveyor according to claim 1, wherein the first temperature rise prevention surface comprises a surface of the first laser reflection later that covers at least a part of a first transportation surface of the first transportation plate.

3. The dross transportation conveyor according to claim 1 or 2,
wherein the first temperature rise prevention surface comprises a surface of a first heat conduction layer that covers at least a part of a first back surface of the first transportation plate, and
wherein the first heat conduction layer is higher in heat conductivity than the first transportation plate.

4. The dross transportation conveyor according to claim 3, wherein the first heat conduction layer comprises one of a copper plating layer, an aluminum plating layer, or a heat dissipation sheet.

5. The dross transportation conveyor according to one of claims 1 to 3,
wherein a main material of the first transportation plate comprises steel, and
wherein the first temperature rise prevention surface comprises one of copper, a copper alloy, aluminum, or an aluminum alloy.

6. The dross transportation conveyor according to one of claims 1 to 5, wherein the first temperature rise prevention surface comprises a surface of a first heat dissipation component disposed in contact with at least a part of a back surface of a first middle portion of the first transportation plate.

7. The dross transportation conveyor according to claim 6, wherein the first heat dissipation component comprises either a plurality of heat dissipation protrusions or a plurality of heat dissipation fins.

8. The dross transportation conveyor according to one of claims 1 to 7, wherein a rear end portion of the first transportation plate and a front end portion of the second transportation plate overlap each other.

9. The dross transportation conveyor according to one of claims 1 to 7, wherein a rear end portion of the first transportation plate and a front end portion of the second transportation plate are hinge-coupled to each other.

10. A dross transportation conveyor comprising:
a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of a laser on a workpiece,
wherein a main material of the first transportation plate comprises one of copper, a copper alloy, aluminum, or an aluminum alloy, and at least a part of a first transportation surface of the first transportation plate comprises one of the copper, the copper alloy, the aluminum, or the aluminum alloy, and
wherein a main material of the second transportation plate comprises one of the copper, the copper alloy, the aluminum, or the aluminum alloy, and at least a part of a second transportation surface of the second transportation plate comprises one of the copper, the copper alloy, the aluminum, or the aluminum alloy.

11. A laser machining apparatus comprising:
a laser irradiator comprising a laser head that irradiates a workpiece with a laser ;
a moving device that moves the leaser head relative to a workpiece support component that supports the workpiece;
a controller that controls the laser irradiator and the moving device; and
a dross transportation conveyor,
wherein the dross transportation conveyor comprises:
a group of transportation plates including a first transportation plate and a second transportation plate, the first transportation plate extending in a first direction, the second transportation plate being disposed to be adjacent to the first transportation plate and extending in the first direction, the group of transportation plates transporting dross generated by irradiation of the laser on the workpiece, and
a first temperature rise prevention surface that covers at least a part of the first transportation plate and that prevents a temperature rise of the first transportation plate due to energy of the laser; and
a second temperature rise prevention surface that covers at least a part of the second transportation plate and that prevents the temperature rise of the second transportation plate due to the energy of the laser.

12. The laser machining apparatus according to claim 11, further comprising a cooler that forcibly cools the group of transportation plates.

13. A workpiece machining method comprising the steps of:
machining a workpiece by irradiating the workpiece with a laser; and
transporting dross generated by irradiating the workpiece with the laser, by using a group of transportation plates including a first transportation plate and a second transportation plate, the first transportation plate extending in a first direction, the second transportation plate being disposed to be adjacent to the first transportation plate and extending in the first direction,
wherein the step of machining the workpiece is performed in a state in which a temperature rise of the first transportation plate due to energy of the laser is prevented by a first temperature rise prevention surface that covers at least a part of the first transportation plate, and in a state in which the temperature rise of the second transportation plate due to the energy of the laser is prevented by a second temperature rise prevention surface that covers at least a part of the second transportation plate.

14. The workpiece machining method according to claim 13, further comprising a step of forcibly cooling the group of transportation plates by using at least one of a cooler of an air-cooling type or a cooler of a liquid-cooling type,
wherein the step of forcibly cooling the group of transportation plates is performed in parallel with the step of machining the workpiece and the step of transporting the dross.
